# EUROPEAN PATENT APPLICATION

(11) **EP 4 836 326 A1**
(43) Date of publication of application: **04.11.2026**
(21) Application number: 25751338.2
(22) Date of filing: 24.01.2025
(51) Int. Cl.: H04B 17/309, H04W 52/14, H04W 52/24

(54) **COMMUNICATION METHOD AND RELATED APPARATUS**

(30) Priority: 08.02.2024 CN 202410179168
(71) Applicant: Huawei Technologies Co., Ltd., Shenzhen, Guangdong 518129 (CN)
(72) Inventor: FAN, Bo, Shenzhen, Guangdong 518129 (CN)
(74) Representative: MERH-IP Matias Erny Reichl Hoffmann Patentanwälte PartG mbB
(86) International application number: PCT/CN2025/074669
(87) International publication number: WO 2025/167736

(57) **Abstract**

This application discloses a communication method and a related apparatus. The communication method includes: sending a second uplink signal to a second network device; receiving a measurement result of the second uplink signal from the second network device; and determining a path loss of the second uplink signal based on the measurement result of the second uplink signal. In embodiments of this application, a terminal device may send an uplink signal to a network device, and the network device measures the uplink signal and returns the measurement result to the terminal device, so that the terminal device can obtain the path loss between the terminal device and the network device based on the measurement result. In this manner, the path loss between the terminal device and the network device can be obtained regardless of whether the network device has a downlink function, thereby improving applicability of the solution.

## Description

This application claims priority to Chinese Patent Application No. 202410179168.7, filed with the China National Intellectual Property Administration on February 8, 2024 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In a wireless communication system, before performing uplink transmission to a network device, a terminal device needs to determine the transmit power of an uplink signal. Currently, the network device sends a downlink signal to the terminal device, and the terminal device calculates the transmit power of the uplink signal based on a signal path loss of the downlink signal (namely, the degree of energy attenuation of the signal during propagation from the network device to the terminal device, referred to as path loss). However, this solution has low applicability.

### SUMMARY

Embodiments of this application provide a communication method and a related apparatus. By enabling a terminal device to send an uplink signal to obtain path loss between the terminal device and a network device, this solution helps improve applicability of path loss acquisition across different scenarios.

According to a first aspect, an embodiment of this application provides a communication method, applied to a terminal device side, for example, a terminal or a communication module in a terminal, or a circuit or a chip (for example, a modem (Modem) chip, also referred to as a baseband (baseband) chip, or a system-on-chip (System-on-Chip, SoC) or a system-in-package (System-in-Package, SIP) chip including a modem core) responsible for a communication function in a terminal device. For example, the method is applied to the terminal device. The method includes:
sending a second uplink signal to a second network device;
receiving a measurement result of the second uplink signal from the second network device; and
determining a path loss of the second uplink signal based on the measurement result of the second uplink signal.

The communication method may be applied to a communication system including a first network device, a terminal device, and the second network device. The terminal device sends a first uplink signal to the first network device, where the first uplink signal is used to determine a path loss between the terminal device and the first network device, and the second uplink signal is used to determine a path loss between the terminal device and the second network device.

It can be learned that in embodiments of this application, a terminal device may send an uplink signal to a network device, and the network device measures the uplink signal, and returns the measurement result to the terminal device, so that the terminal device can obtain the path loss between the terminal device and the network device based on the measurement result. In this manner, the path loss between the terminal device and the network device can be obtained regardless of whether the network device has a downlink function, thereby improving applicability of the solution.

In a possible implementation, the measurement result of the second uplink signal includes one or more of the following:
a received power of the second uplink signal;
the path loss of the second uplink signal;
a difference between the received power of the second uplink signal and a received power of a first uplink signal; and
a difference between the path loss of the second uplink signal and a path loss of the first uplink signal.

The first uplink signal is an uplink signal sent by the terminal device to a first network device.

The first network device may measure the first uplink signal to obtain a measurement result of the first uplink signal. The measurement result of the first uplink signal includes the received power of the first uplink signal, the path loss of the first uplink signal, and the like. The first network device may send the received power of the first uplink signal, the path loss of the first uplink signal, or the like to the second network device. The second network device may obtain the difference between the received power of the second uplink signal and the received power of the first uplink signal based on the received power of the first uplink signal and the received power of the second uplink signal. The second network device may obtain the difference between the path loss of the second uplink signal and the path loss of the first uplink signal based on the path loss of the first uplink signal and the path loss of the second uplink signal.

In this implementation, the second network device may directly indicate the path loss of the second uplink signal to the terminal device, or may indicate, to the terminal device, calculation parameters (for example, the received power, the received power difference, and the path loss difference) of the path loss of the second uplink signal, so that the terminal device determines the path loss of the second uplink signal based on these calculation parameters.

In a possible implementation, the measurement result of the second uplink signal is carried in a media access control MAC control element CE.

In this implementation, the second network device may indicate the measurement result of the second uplink signal to the terminal device through a dedicated MAC CE or an enhanced MAC CE of an existing MAC CE.

In a possible implementation, the MAC CE is a first MAC CE, and the first MAC CE includes the measurement result of the second uplink signal and one or more of the following:
an index of the second uplink signal; and
an index of a resource set corresponding to the second uplink signal.

In this implementation, the second network device may place K measurement results of the second uplink signals into the first MAC CE, to indicate the measurement results to the terminal device through the first MAC CE, so that the terminal device obtains the path losses of the second uplink signals based on the measurement results. In addition, the index of the second uplink signal and/or the index of the resource set corresponding to the second uplink signal is placed in the first MAC CE, and a reference signal resource in an activated second TCI-state may be associated with, based on the index, the second uplink signal for which the measurement result is returned. For example, the second uplink signal for which the measurement result is returned is the reference signal resource in the activated second TCI-state or a good reference signal resource in the activated second TCI-state.

The second TCI state is an uplink TCI state or an uplink/downlink TCI state corresponding to a 2^{nd} control channel group. The second TCI state is a TCI state used by the terminal device to perform uplink transmission with the second network device.

The 2^{nd} control channel group is a control channel group corresponding to the second network device.

A 1^{st} control channel group is a control channel group corresponding to the first network device. An uplink TCI state or an uplink/downlink TCI state corresponding to the 1^{st} control channel group is a first TCI state.

In a possible implementation, there are M second uplink signals, the first MAC CE includes K measurement results of second uplink signals, K is equal to a quantity of activated second transmission configuration indicator TCI states, or K is equal to a quantity of different reference signal resources included in activated second TCI states, and M is greater than or equal to K.

In this implementation, the quantity K of measurement results of the second uplink signals in the first MAC CE may be equal to the quantity of activated second TCI-states, or may be equal to a quantity of different reference signal resources included in activated second TCI-states, so that the second network device can indicate the reference signal resources in the activated second TCI-state to the terminal device.

In a possible implementation, an i^{th} measurement result in the K measurement results corresponds to an i^{th} TCI state in the K activated second TCI states; or an i^{th} measurement result in the K measurement results corresponds to a reference signal resource in an i^{th} TCI state in the K activated second TCI states.

In this implementation, there is a correspondence between the i^{th} measurement result in the K measurement results in the first MAC CE and the i^{th} TCI-state in the K activated second TCI-states or the reference signal resource in the i^{th} second TCI-state in the K activated second TCI-states.

In a possible implementation, the MAC CE is a second MAC CE, the second MAC CE is a MAC CE used to activate a TCI state of a control resource group, and the second MAC CE includes the measurement result of the second uplink signal.

In a possible implementation, when the second MAC CE meets a first condition, the second MAC CE includes the measurement result of the second uplink signal. The first condition includes one or a combination of the following:
a value of a 1^{st} field in the second MAC CE is 1;
one field in the second MAC CE indicates that the second MAC CE includes a bit indicating the measurement result of the second uplink signal;
one of the first network device and the second network device has only an uplink function, or an RRC configuration specifies that downlink transmission is based on a single network device and uplink transmission is based on two network devices;
a path loss reference signal resource in the TCI-state activated by the second MAC CE is an SRS resource; and
the TCI-state activated by the second MAC CE is an uplink TCI-state.

In this implementation, the MAC CE used to activate the TCI-state of the control resource group may be enhanced, and an additional field is introduced to indicate one or more measurement results. The measurement results correspond to one or more TCI-states activated by the MAC CE, or reference signal resources in one or more activated TCI-states.

In a possible implementation, the MAC CE is a third MAC CE, the third MAC CE is a MAC CE used to activate a joint uplink/downlink TCI state, and the third MAC CE includes the measurement result of the second uplink signal.

In a possible implementation, when the third MAC CE meets a second condition, the third MAC CE includes the measurement result of the second uplink signal. The second condition includes one or a combination of the following:
one field in the third MAC CE indicates that the third MAC CE includes a bit indicating the measurement result of the second uplink signal;
one of the first network device and the second network device has only an uplink function, or an RRC configuration specifies that downlink transmission is based on a single network device and uplink transmission is based on two network devices; and
a path loss reference signal resource in the TCI-state activated by the third MAC CE is an SRS resource.

In this implementation, the MAC CE used to activate the joint uplink/downlink TCI-state may be enhanced, and an additional field is introduced to indicate one or more measurement results. The measurement results correspond to one or more TCI-states activated by the MAC CE, or reference signal resources in one or more activated TCI-states.

In a possible implementation, the MAC CE is a fourth MAC CE, the fourth MAC CE is a MAC CE used to activate separate uplink/downlink TCI states, and the fourth MAC CE includes the measurement result of the second uplink signal.

In a possible implementation, when the fourth MAC CE meets a third condition, the fourth MAC CE includes the measurement result of the second uplink signal. The third condition includes one or a combination of the following:
one field in the fourth MAC CE indicates that the third MAC CE includes a bit indicating the measurement result of the second uplink signal;
one of the first network device and the second network device has only an uplink function, or an RRC configuration specifies that downlink transmission is based on a single network device and uplink transmission is based on two network devices; and
a path loss reference signal resource in the TCI-state activated by the fourth MAC CE is an SRS resource.

In this implementation, the MAC CE used to activate the separate uplink/downlink TCI states may be enhanced, and an additional field is introduced to indicate one or more measurement results. The measurement results correspond to one or more TCI-states activated by the MAC CE, or reference signal resources in one or more activated TCI-states.

In a possible implementation, when the measurement result of the second uplink signal includes the received power of the second uplink signal, the determining the path loss of the second uplink signal based on the measurement result of the second uplink signal includes:
determining the path loss of the second uplink signal based on the received power of the second uplink signal and a transmit power of the second uplink signal.

In this implementation, when the second network device notifies the terminal device of the RSRP of the second uplink signal, the terminal device may obtain the path loss of the second uplink signal based on the RSRP and the transmit power of the second uplink signal, to determine, based on the path loss, a transmit power for sending an uplink signal next time.

In a possible implementation, the method further includes:
determining a transmit power of a third uplink signal based on the path loss of the second uplink signal; and
sending the third uplink signal to the second network device at the transmit power of the third uplink signal.

In this implementation, the terminal device may determine the transmit power of the third uplink signal based on the path loss value corresponding to the TCI-state used by the third uplink signal or based on a path loss value of the reference signal in the TCI-state used by the third uplink signal, to send the third uplink signal at the transmit power.

According to a second aspect, an embodiment of this application provides a communication method, applied to a network side, for example, a second network device or a chip in a second network device. The method includes:
receiving a second uplink signal sent by a terminal device;
obtaining a measurement result of the second uplink signal; and
sending the measurement result of the second uplink signal to the terminal device.

It can be learned that in this embodiment of this application, a network device may receive an uplink signal sent by a terminal device, measure the uplink signal, and then return the measurement result to the terminal device, so that the terminal device can obtain the path loss between the terminal device and the network device based on the measurement result. In this manner, the path loss between the terminal device and the network device can be obtained regardless of whether the network device has a downlink function, thereby improving applicability of the solution.

In a possible implementation, the measurement result of the second uplink signal includes one or more of the following:
a received power of the second uplink signal;
a path loss of the second uplink signal;
a difference between the received power of the second uplink signal and a received power of a first uplink signal; and
a difference between the path loss of the second uplink signal and a path loss of the first uplink signal.

The first uplink signal is an uplink signal sent by the terminal device to a first network device.

In this implementation, the second network device may directly indicate the path loss of the second uplink signal to the terminal device, or may indicate, to the terminal device, calculation parameters (for example, the RSRP, the RSRP difference, and the path loss difference) of the path loss of the second uplink signal, so that the terminal device determines the path loss of the second uplink signal based on these calculation parameters.

In a possible implementation, the measurement result of the second uplink signal is carried in a media access control MAC control element CE.

In this implementation, the second network device may indicate the measurement result of the second uplink signal to the terminal device through a dedicated MAC CE or an enhanced MAC CE of an existing MAC CE.

In a possible implementation, the MAC CE is a first MAC CE, and the first MAC CE includes the measurement result of the second uplink signal and one or more of the following:
an index of the second uplink signal; and
an index of a resource set corresponding to the second uplink signal.

In this implementation, the second network device may place K measurement results of the second uplink signals into the first MAC CE, to indicate the measurement results to the terminal device through the first MAC CE, so that the terminal device obtains the path losses of the second uplink signals based on the measurement results. In addition, the index of the second uplink signal and/or the index of the resource set corresponding to the second uplink signal is placed in the first MAC CE, and a reference signal resource in an activated second TCI-state may be associated with, based on the index, the second uplink signal for which the measurement result is returned. For example, the second uplink signal for which the measurement result is returned is the reference signal resource in the activated second TCI-state or a good reference signal resource in the activated second TCI-state.

The second TCI state is an uplink TCI state or an uplink/downlink TCI state corresponding to a 2^{nd} control channel group.

In a possible implementation, there are M second uplink signals, the first MAC CE includes K measurement results of second uplink signals, K is equal to a quantity of activated second transmission configuration indicator TCI states, or K is equal to a quantity of different reference signal resources included in activated second TCI states, and M is greater than or equal to K.

In this implementation, the quantity K of measurement results of the second uplink signals in the first MAC CE may be equal to the quantity of activated second TCI-states, or may be equal to a quantity of different reference signal resources included in the activated second TCI-states, so that the second network device can indicate the reference signal resources in the activated second TCI-state to the terminal device.

In a possible implementation, an i^{th} measurement result in the K measurement results corresponds to an i^{th} TCI state in the K activated second TCI states; or an i^{th} measurement result in the K measurement results corresponds to a reference signal resource in an i^{th} TCI state in the K activated second TCI states.

In this implementation, there is a correspondence between the i^{th} measurement result in the K measurement results in the first MAC CE and the i^{th} TCI-state in the K activated second TCI-states or the reference signal resource in the i^{th} second TCI-state in the K activated second TCI-states.

In a possible implementation, the MAC CE is a second MAC CE, the second MAC CE is a MAC CE used to activate a TCI state of a control resource group, and the second MAC CE includes the measurement result of the second uplink signal.

In this implementation, the MAC CE used to activate the TCI-state of the control resource group may be enhanced, and an additional field is introduced to indicate one or more measurement results. The measurement results correspond to one or more TCI-states activated by the MAC CE, or reference signal resources in one or more activated TCI-states.

In a possible implementation, the MAC CE is a third MAC CE, the third MAC CE is a MAC CE used to activate a joint uplink/downlink TCI state, and the third MAC CE includes the measurement result of the second uplink signal.

In this implementation, the MAC CE used to activate the joint uplink/downlink TCI-state may be enhanced, and an additional field is introduced to indicate one or more measurement results. The measurement results correspond to one or more TCI-states activated by the MAC CE, or reference signal resources in one or more activated TCI-states.

In a possible implementation, the MAC CE is a fourth MAC CE, the fourth MAC CE is a MAC CE used to activate separate uplink/downlink TCI states, and the fourth MAC CE includes the measurement result of the second uplink signal.

In this implementation, the MAC CE used to activate the separate uplink/downlink TCI states may be enhanced, and an additional field is introduced to indicate one or more measurement results. The measurement results correspond to one or more TCI-states activated by the MAC CE, or reference signal resources in one or more activated TCI-states.

According to a third aspect, an embodiment of this application provides a communication apparatus. The communication apparatus has a function of implementing the first aspect. For example, the communication apparatus includes a corresponding module, unit, or means (means) for performing an operation in the first aspect. The module, unit, or means may be specifically implemented by using software, or implemented by using hardware, or implemented by using a combination of software and hardware. The apparatus includes a first transceiver unit and a first processing unit.

The first transceiver unit is configured to: send a second uplink signal to a second network device; and receive a measurement result of the second uplink signal from the second network device.

The first processing unit is configured to determine a path loss of the second uplink signal based on the measurement result of the second uplink signal.

In a possible implementation, the measurement result of the second uplink signal includes one or more of the following:
a received power of the second uplink signal;
the path loss of the second uplink signal;
a difference between the received power of the second uplink signal and a received power of a first uplink signal; and
a difference between the path loss of the second uplink signal and a path loss of the first uplink signal.

The first uplink signal is an uplink signal sent by the terminal device to a first network device.

In a possible implementation, the measurement result of the second uplink signal is carried in a media access control MAC control element CE.

In a possible implementation, the MAC CE is a first MAC CE, and the first MAC CE includes the measurement result of the second uplink signal and one or more of the following:
an index of the second uplink signal; and
an index of a resource set corresponding to the second uplink signal.

In a possible implementation, there are M second uplink signals, the first MAC CE includes K measurement results of second uplink signals, K is equal to a quantity of activated second transmission configuration indicator TCI states, or K is equal to a quantity of different reference signal resources included in activated second TCI states, and M is greater than or equal to K.

The second TCI state is an uplink TCI state or an uplink/downlink TCI state corresponding to a 2^{nd} control channel group.

In a possible implementation, an i^{th} measurement result in the K measurement results corresponds to an i^{th} TCI state in the K activated second TCI states; or an i^{th} measurement result in the K measurement results corresponds to a reference signal resource in an i^{th} TCI state in the K activated second TCI states.

In a possible implementation, the MAC CE is a second MAC CE, the second MAC CE is a MAC CE used to activate a TCI state of a control resource group, and the second MAC CE includes the measurement result of the second uplink signal.

In a possible implementation, the MAC CE is a third MAC CE, the third MAC CE is a MAC CE used to activate a joint uplink/downlink TCI state, and the third MAC CE includes the measurement result of the second uplink signal.

In a possible implementation, the MAC CE is a fourth MAC CE, the fourth MAC CE is a MAC CE used to activate separate uplink/downlink TCI states, and the fourth MAC CE includes the measurement result of the second uplink signal.

In a possible implementation, when the measurement result of the second uplink signal includes the received power of the second uplink signal, in the aspect of determining the path loss of the second uplink signal based on the measurement result of the second uplink signal, the first processing unit is specifically configured to:
determine the path loss of the second uplink signal based on the received power of the second uplink signal and a transmit power of the second uplink signal.

In a possible implementation, the first processing unit is further configured to determine a transmit power of a third uplink signal based on the path loss of the second uplink signal.

The first transceiver unit is further configured to send the third uplink signal to the second network device at the transmit power of the third uplink signal.

It should be understood that the method embodiment and the apparatus embodiment are different presentation forms of a same technical concept. Therefore, content in the first aspect of embodiments of this application should be correspondingly applied to the third aspect of embodiments of this application, and same or similar beneficial effect can be achieved. Details are not described herein again.

According to a fourth aspect, an embodiment of this application provides a communication apparatus. The communication apparatus has a function of implementing the second aspect. For example, the communication apparatus includes a corresponding module, unit, or means (means) for performing an operation in the second aspect. The module, unit, or means may be specifically implemented by using software, or implemented by using hardware, or implemented by using a combination of software and hardware. The apparatus includes a second transceiver unit and a second processing unit.

The second transceiver unit is configured to receive a second uplink signal sent by a terminal device.

The second processing unit is configured to obtain a measurement result of the second uplink signal.

The second transceiver unit is further configured to send the measurement result of the second uplink signal to the terminal device.

In a possible implementation, the measurement result of the second uplink signal includes one or more of the following:
a received power of the second uplink signal;
a path loss of the second uplink signal;
a difference between the received power of the second uplink signal and a received power of a first uplink signal; and
a difference between the path loss of the second uplink signal and a path loss of the first uplink signal.

The first uplink signal is an uplink signal sent by the terminal device to a first network device.

In a possible implementation, the measurement result of the second uplink signal is carried in a media access control MAC control element CE.

In a possible implementation, the MAC CE is a first MAC CE, and the first MAC CE includes the measurement result of the second uplink signal and one or more of the following:
an index of the second uplink signal; and
an index of a resource set corresponding to the second uplink signal.

In a possible implementation, there are M second uplink signals, the first MAC CE includes K measurement results of second uplink signals, K is equal to a quantity of activated second transmission configuration indicator TCI states, or K is equal to a quantity of different reference signal resources included in activated second TCI states, and M is greater than or equal to K.

The second TCI state is an uplink TCI state or an uplink/downlink TCI state corresponding to a 2^{nd} control channel group.

In a possible implementation, an i^{th} measurement result in the K measurement results corresponds to an i^{th} TCI state in the K activated second TCI states; or an i^{th} measurement result in the K measurement results corresponds to a reference signal resource in an i^{th} TCI state in the K activated second TCI states.

In a possible implementation, the MAC CE is a second MAC CE, the second MAC CE is a MAC CE used to activate a TCI state of a control resource group, and the second MAC CE includes the measurement result of the second uplink signal.

In a possible implementation, the MAC CE is a third MAC CE, the third MAC CE is a MAC CE used to activate a joint uplink/downlink TCI state, and the third MAC CE includes the measurement result of the second uplink signal.

In a possible implementation, the MAC CE is a fourth MAC CE, the fourth MAC CE is a MAC CE used to activate separate uplink/downlink TCI states, and the fourth MAC CE includes the measurement result of the second uplink signal.

It should be understood that the method embodiment and the apparatus embodiment are different presentation forms of a same technical concept. Therefore, content in the second aspect of embodiments of this application should be correspondingly applied to the fourth aspect of embodiments of this application, and same or similar beneficial effect can be achieved. Details are not described herein again.

According to a fifth aspect, an embodiment of this application provides a communication device, including a processor, a memory, a communication interface, and one or more programs. The one or more programs are stored in the memory, and when executed by the processor, the one or more programs cooperate with the communication interface to implement the method according to any embodiment of the first aspect or the second aspect.

In a possible design, the communication device may further include an interface circuit, and the processor is configured to communicate with another apparatus or component via the interface circuit.

According to a sixth aspect, an embodiment of this application provides a chip. The chip includes a processor, configured to invoke a computer program from a memory and run the computer program, to enable a device in which the chip is mounted to perform the method according to any embodiment of the first aspect or the second aspect.

According to a seventh aspect, an embodiment of this application provides a computer-readable storage medium. The computer-readable storage medium stores a computer program to be executed by a device, and when the computer program is executed, the method according to any embodiment of the first aspect or the second aspect is implemented.

According to an eighth aspect, an embodiment of this application provides a computer program product. When the computer program product is executed by a communication device, the communication device is enabled to perform the method according to any embodiment of the first aspect or the second aspect.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of a transmission scenario of two TRPs;
FIG. 2 is a diagram of determining a path loss;
FIG. 3 is a diagram of a system architecture according to an embodiment of this application;
FIG. 4 is a diagram of an ORAN architecture according to an embodiment of this application;
FIG. 5 is a diagram of network element function division and a protocol layer structure of an ORAN device according to an embodiment of this application;
FIG. 6 is a schematic flowchart of a communication method according to an embodiment of this application;
FIG. 7A is a diagram of a format of a MAC CE according to an embodiment of this application;
FIG. 7B is a schematic flowchart of another communication method according to an embodiment of this application;
FIG. 8 is a schematic flowchart of another communication method according to an embodiment of this application;
FIG. 9 is a diagram of a format of another MAC CE according to an embodiment of this application;
FIG. 10 is a diagram of a format of another MAC CE according to an embodiment of this application;
FIG. 11 is a diagram of a format of another MAC CE according to an embodiment of this application;
FIG. 12 is a diagram of a format of another MAC CE according to an embodiment of this application;
FIG. 13 is a diagram of a format of another MAC CE according to an embodiment of this application;
FIG. 14 is a diagram of a format of another MAC CE according to an embodiment of this application;
FIG. 15 is a schematic flowchart of another communication method according to an embodiment of this application;
FIG. 16 is a diagram of a structure of a communication apparatus according to an embodiment of this application;
FIG. 17 is a diagram of a structure of another communication apparatus according to an embodiment of this application;
FIG. 18 is a diagram of a structure of a communication device according to an embodiment of this application; and
FIG. 19 is a diagram of a structure of a communication device according to an embodiment of this application.

### DESCRIPTION OF EMBODIMENTS

In the specification, claims, and accompanying drawings of this application, the terms "first", "second", "third", "fourth" and the like are intended to distinguish between different objects but do not indicate a particular order. In addition, terms such as "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. Persons skilled in the art explicitly or implicitly understands that embodiments described in this specification may be combined with other embodiments.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a terminal device and an application that runs on the terminal device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

First, related terms and related technical background in this application are briefly described, to facilitate understanding of persons skilled in the art.
(1) Angle of arrival: angle of arrival, AOA
(2) Acknowledgement: acknowledgement, ACK;
(3) User equipment: user equipment, UE;
(4) Beam pair link: beam pair link, BPL;
(5) Demodulation reference signal: Demodulation reference signal, DMRS;
(6) Channel state information reference signal: channel state information reference signal, CSI-RS;
(7) Channel quality indicator: channel quality indicator, CQI;
(8) Downlink control information: downlink control information, DCI;
(9) Enhanced mobile broadband: enhanced mobile broadband, eMBB
(10) Frequency division duplex: frequency division duplex, FDD;
(11) Fast Fourier transform: fast Fourier transform, FFT;
(12) Hybrid automatic repeat request: hybrid automatic repeat request, HARQ;
(13) Inverse fast Fourier transform: inverse fast Fourier transform, IFFT;
(14) Long term evolution: long term evolution, LTE
(15) Medium access control: medium access control, MAC
(16) Negative-acknowledgement: negative-acknowledgement, NACK;
(17) New radio: new radio, NR;
(18) Orthogonal frequency division multiplexing: orthogonal frequency division multiplexing, OFDM;
(19) Physical broadcast channel: physical broadcast channel, PBCH;
(20) Primary component carrier: primary component carrier, PCC;
(21) Physical uplink shared channel: physical uplink shared channel, PUSCH;
(22) Physical uplink control channel: physical uplink control channel, PUCCH;
(23) Physical downlink control channel: physical downlink control channel, PDCCH;
(24) Physical downlink shared channel: physical downlink shared channel, PDSCH;
(25) Reference signal: reference signal, RS;
(26) Precoding matrix indicator: precoding matrix indicator, PMI;
(27) Phase noise compensation reference signal: phase noise compensation reference signal, PRCS;
(28) Power spectrum density: power spectrum density, PSD;
(29) Primary synchronization signal: primary synchronization signal, PSS;
(30) Phase tracking reference signal: Phase tracking reference signal, PTRS;
(31) Quasi-co-location: quasi-co-location, QCL;
(32) Random access channel: random access channel, RACH;
(33) Resource block: resource block, RB;
(34) Resource element: resource element, RE;
(35) Resource element group: resource element group, REG;
(36) Radio frequency: radio frequency, RF;
(37) Rank indicator: rank indicator, RI;
(38) Radio link failure: radio link failure, RLF;
(39) Radio link monitoring: radio link monitoring, RLM;
(40) Radio network temporary identifier: radio network temporary identifier, RNTI;
(41) Reference signal received power: reference signal received power, RSRP;
(42) Reference signal received quality: reference signal received quality, RSRQ;
(43) Radio resource control: radio resource control, RRC;
(44) Redundant version: redundant version, RV;
(45) Sounding reference signal: sounding reference signal, SRS;
(46) Synchronization signal: synchronization signal, SS;
(47) Secondary synchronization signal: secondary synchronization signal, SSS;
(48) Synchronization signal and PBCH block: synchronization signal and PBCH block, SSB;
(49) Timing advance: timing advance, TA;
(50) Timing advance group: timing advance group, TAG;
(51) Transport block: transport block, TB;
(52) Transmission configuration indicator: transmission configuration indicator, TCI;
(53) Uplink control information: uplink control information, UCI;
(54) Bandwidth part: bandwidth part, BWP; and
(55) Beam: A beam refers to special directional sending or receiving effect formed by a transmitter or a receiver of a network device or a terminal device through an antenna array. This is similar to how a flashlight converges light in a single direction to form a light beam. Signal sending and receiving in a form of the beam can effectively increase a signal transmission distance. The beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like. The beam usually corresponds to a resource. For example, during beam measurement, a network device measures different beams by using different resources, a terminal device feeds back measured resource quality, and the network device knows quality of a corresponding beam. During data transmission, beam information is also indicated by using a resource corresponding to the beam information. For example, the network device indicates a TCI-state (TCI-state) by using a TCI field in the DCI, and the terminal device determines, based on a reference resource included in the TCI-state, to use the reference resource to determine a beam of data.
   In a communication protocol, a beam may be specifically represented as a digital beam, an analog beam, a spatial domain filter (spatial domain filter), a spatial filter (spatial filter), a spatial parameter (spatial parameter), a TCI, a TCI-state, or the like. A beam used to send a signal may be referred to as a transmission beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a reception beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like. In this application, a beam is uniformly used for description. However, it should be understood that the beam in this application may be replaced with another equivalent concept, and is not limited to the foregoing mentioned concept.
(56) Resource: In a communication protocol, an RS is configured in a form of a resource. A network device configures each RS for a terminal device in the form of the resource. One resource is one configuration information unit, and usually includes a parameter related to one RS, for example, a time-frequency resource location, a quantity of ports, and a time domain type (periodic/semi-static/aperiodic) of the RS. The resource may be an uplink signal resource, or may be a downlink signal resource. The uplink signal includes but is not limited to an SRS and a DMRS. The downlink signal includes but is not limited to: a CSI-RS, namely, a cell specific reference signal (cell specific reference signal, CS-RS), a UE specific reference signal (user equipment specific reference signal, US-RS), a DMRS, and an SSB (also referred to as a synchronization signal block for short).
(57) TCI-state: The network device indicates, through the TCI-state, information such as a beam and a path loss measurement resource used for uplink transmission. Specifically, the TCI-state includes a reference signal resource used for beam reference, and uplink transmission based on the TCI-state should be performed based on a beam corresponding to the reference signal resource. The TCI-state further includes a reference signal resource used to determine a path loss, and the uplink transmission based on the TCI-state should be performed based on a path loss corresponding to the reference signal resource. The TCI-state is classified into an uplink TCI-state (dedicated for uplink transmission), a downlink TCI-state (dedicated for downlink transmission), and a joint uplink/downlink TCI-state (which may be used for uplink transmission and downlink transmission). Unless otherwise specified in this application, the TCI-state is an uplink TCI-state and/or a joint uplink/downlink TCI-state.

In a mobile communication system, a terminal device sending a signal to a network device is referred to as uplink transmission. Sending, by a network device, a downlink signal to a terminal device is referred to as downlink transmission. Because a transmit power of the terminal device is generally less than a transmit power of the network device, signal strength of uplink transmission is generally less than signal strength of downlink transmission. Consequently, some terminal devices have good downlink transmission performance but poor uplink transmission performance. To resolve this problem, a method is to deploy some low-cost network devices that have only an uplink function. If such a network device exists around the terminal device, uplink transmission may be performed via the network device, thereby improving uplink transmission performance.

A transmit/receive point (Transmit/Receive Point, TRP) is a network device located on a network side of a communication system and a device or module having a corresponding communication function. A communication module, a circuit, or a chip that performs the corresponding communication function is usually disposed in the TRP. Program instructions for performing the corresponding communication function and corresponding program instructions may also be configured in the TRP. For example, the TRP in this embodiment of this application may be a RAN device or a network element deployed in a radio access network (radio access network, RAN). For example, the TRP may be a RAN device or an apparatus that can support a RAN device to implement a function, for example, a chip system or a combined device or component that can implement a function of an access network device, and the apparatus may be mounted in the RAN device.

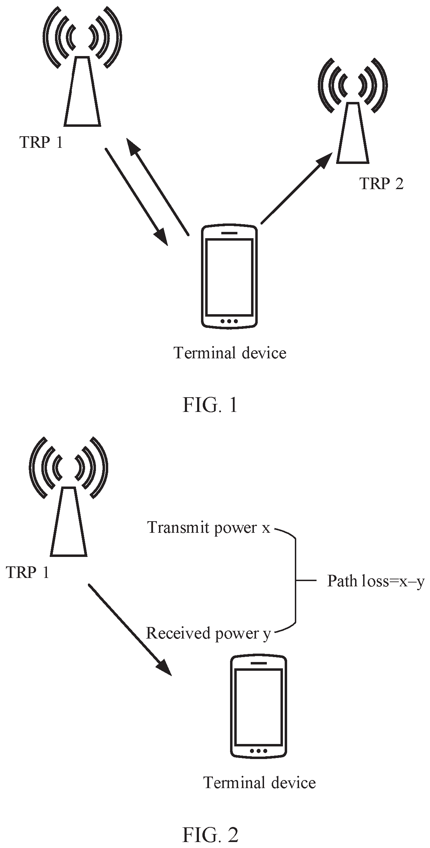

As shown in FIG. 1, a TRP 1 is a TRP having an uplink function and a downlink function, and a TRP 2 is a TRP having only an uplink function. The TRP 2 is closer to a terminal device. When the terminal device performs communication via the TRP 1, downlink signal quality is good, but uplink signal quality is poor. In this case, the terminal device may further establish a connection to the TRP 2, and perform joint uplink transmission based on the TRP 1 and the TRP 2. In other words, the terminal device may transmit an uplink signal to the TRP 1 and the TRP 2, to improve uplink transmission performance of the terminal device.

Alternatively, on the contrary, the TRP 1 is a TRP having only an uplink function, and the TRP 2 is a TRP having an uplink function and a downlink function. In other words, "first" and "second" in this application are merely used for differentiation, and are not limited to a sequence or a magnitude relationship. The first and the second in this application may also be interchanged, that is, the first is replaced with the second, and the second is replaced with the first.

That the terminal device transmits the uplink signal to the TRP 1 and the TRP 2 may be referred to as uplink multi-TRP transmission. The uplink multi-TRP transmission includes one or more of the following transmission modes. Unless otherwise specified, the method in this application is applicable to a scenario corresponding to any one of the following modes.

Mode 1: The terminal device separately transmits same data to two TRPs at different time, and a network side combines same data signals received by the two TRPs, to improve signal strength of the data.

Mode 2: The terminal device transmits same data to two TRPs at the same time, and the network side combines same data signals received by the two TRPs, to improve signal strength of the data.

Mode 3: The terminal device transmits different data or different data streams of same data to two TRPs at the same time, to increase a data amount of uplink transmission and improve uplink transmission performance.

In the uplink transmission, the terminal device needs to determine a transmit power of an uplink signal sent to the network device, and the transmit power is usually calculated based on a path loss of signal transmission between the terminal device and the network device. In a related technology, the terminal device obtains a path loss of a downlink signal (namely, a path loss between the terminal device and the network device) by measuring the downlink signal sent by the network device to the terminal device. As shown in FIG. 2, the network device sends a path loss measurement reference signal to the terminal device at a specific transmit power x (the network device indicates the transmit power to the terminal device in advance, and a unit is decibel milliwatt dBm). The terminal device performs measurement to obtain a received power y (unit: dBm) of the path loss measurement reference signal. The terminal device subtracts the received power y (unit: dB) of the path loss measurement reference signal from the transmit power x of the path loss measurement reference signal, to obtain a path loss x-y (unit: dB) between the terminal device and the network device. It should be understood that, for a same terminal device and a same network device, a path loss of uplink transmission is the same as a path loss of downlink transmission. Therefore, the terminal device may obtain a path loss experienced during uplink transmission by measuring the downlink signal.

In a related technology, the terminal device obtains the path loss between the terminal device and the network device by measuring the downlink signal of the network device, to determine the transmit power of the uplink signal based on the path loss. However, in the scenario shown in FIG. 1, the TRP 2 does not have a downlink function, and cannot send a downlink signal. Therefore, measuring the path loss between the network device and the terminal device based on the downlink signal is not applicable.

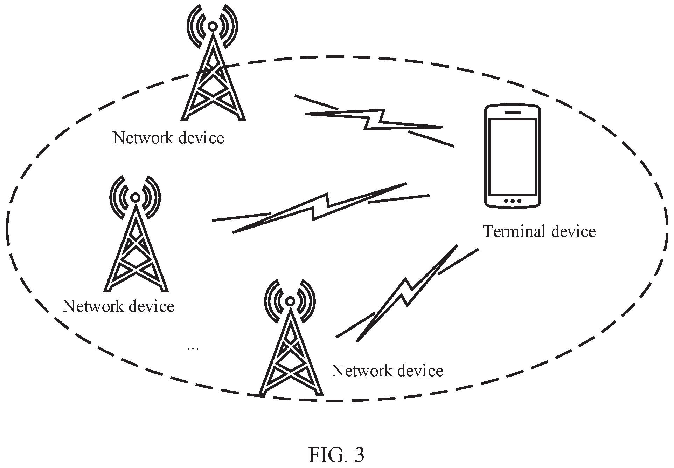

To overcome defects and disadvantages of the related technology, this application provides a communication method. The method may be applied to the system architecture shown in FIG. 3. As shown in FIG. 3, the system architecture includes a plurality of network devices and at least one terminal device. The plurality of network devices may simultaneously transmit data or control signaling for a single terminal device.

The network device may include base stations in various forms, for example, a macro base station, a micro base station (also referred to as a small cell), a relay station, and an access point. In systems using different radio access technologies, names of devices having a base station function may be different. For example, the device is referred to as a gNB in a 5G system, an evolved NodeB (evolved NodeB, eNB or eNodeB) in an LTE system, a NodeB (NodeB) in a 3rd generation (3rd generation, 3G) system or a wideband code division multiple access (Wideband Code Division Multiple Access, WCDMA) system, and a base transceiver station (Base Transceiver Station, BTS) in a global system for mobile communication (Global System for Mobile Communication, GSM) or a code division multiple access (Code Division Multiple Access, CDMA) network. Alternatively, the network device may be a radio controller in a cloud radio access network (Cloud Radio Access Network, CRAN) scenario, or may be a base station device in a future 5G network, or may be a related device configured to implement a network side function in a future evolved public land mobile network (Public Land Mobile Network, PLMN), or may be a TRP, or the like.

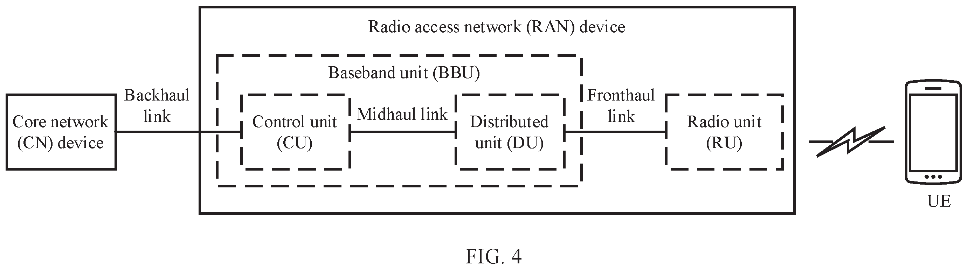

In some deployments, the network device may alternatively be a radio unit (radio unit, RU), an open radio access network (open radio access network, ORAN) architecture, or the like. A deployment manner of the network device is not limited in embodiments of this application. For example, FIG. 4 is a diagram of an ORAN architecture according to an embodiment of this application. As shown in FIG. 4, the ORAN architecture includes a core network (Core Network, CN) device, a radio access network (Radio Access Network, RAN) device, and a UE. The RAN device communicates with the CN device through a backhaul (Backhaul) link, and communicates with the UE through an air interface. Specifically, a baseband unit (Baseband Unit, BBU) in the RAN device communicates with the CN through the backhaul link, an RU in the RAN device communicates with at least one UE through the air interface, and a BBU communicates with at least one RU through a fronthaul link. The BBU and the RU may be co-located, or may not be co-located.

For example, the BBU includes at least one control unit (Control Unit, CU) and at least one distributed unit (Distributed Unit, DU), and the control unit and the distributed unit may communicate with each other through at least one midhaul (Midhaul) link. In some other deployments, the CU may alternatively be divided into a CU-control plane (control plane, CP), a CU-user plane (user plane, UP), and the like.

For example, in an ORAN architecture, the network device shown in this embodiment of this application may be a RAN device in an ORAN, a module in a RAN device, or the like. In the ORAN architecture, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU.

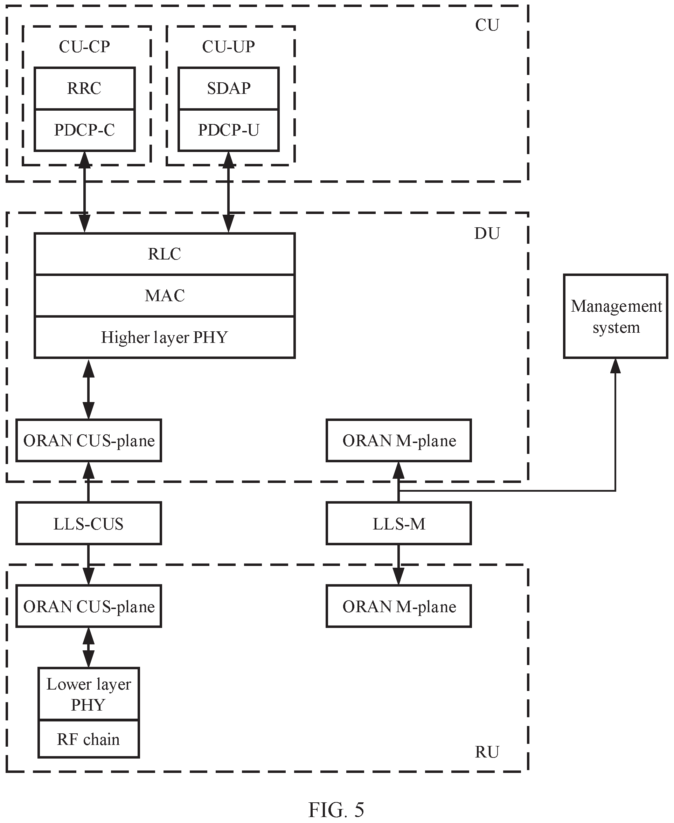

In some deployments, the network device may be referred to as an ORAN device. For example, FIG. 5 is a diagram of network element function division and a protocol layer structure of an ORAN device according to an embodiment of this application. As shown in FIG. 5, a CU is a logical node that carries an RRC layer, a service data adaptation protocol (Service Data Adaptation Protocol, SDAP) layer, a packet data convergence protocol (Packet Data Convergence Protocol, PDCP) layer, and another control function. The CU is connected to a network node such as a CN through some interfaces. These interfaces may be E2 interfaces or the like. Optionally, the CU may have a part of functions of the CN. The CU (for example, a PDCP layer and a higher layer) is connected to the DU (for example, a radio link control (Radio Link Control, RLC) layer, a MAC layer, and a higher-layer physical (Physical, PHY) layer) through some interfaces. These interfaces may be F1 interfaces or the like. In some examples, these interfaces (such as the F1 interface) may provide control plane and user plane functions (such as interface management, system information management, UE context management, RRC message transmission, and the like). An F1 application protocol (Application Protocol, AP) is an application protocol for the F1 interface and defines an F1 signaling procedure in some examples. The F1 interface supports F1-C on a control plane and F1-U on a user plane.

In some deployments, the CU may be split into a CU-CP and a CU-UP, and the CU-CP may interact with a network element that is in the CN and configured to implement a control plane function. The CU-CP is a logical node that carries an RRC layer and a PDCP-C (Control plane part of PDCP) layer, and is configured to implement a control plane function of the CU. The CU-CP may interact with a network element that is in the CN and configured to implement a control plane function. The network element that is in the CN and configured to implement the control plane function may be an access and mobility function network element, for example, an access and mobility management function (Access and Mobility Management Function, AMF) network element in a 5G system. The AMF network element is configured to be responsible for mobility management in a mobile network, for example, location update of a terminal device, network registration of the terminal device, and handover of the terminal device. The CU-UP is a logical node that carries the SDAP layer and a PDCP-U (User plane part of PDCP) layer, and is configured to implement a user plane function of the CU. The CU-UP may interact with a network element that is in the CN and configured to implement a user plane function. The network element that is in the CN and configured to implement the user plane function, for example, a user plane function (user plane function, UPF) network element in the 5G system, is configured to be responsible for forwarding and receiving data in the terminal device.

In some deployments, the DU is a logical node that carries the RLC layer, the MAC layer, the higher-layer PHY layer, and other functions. In some examples, the DU may control at least one RU. The DU is connected to the RU through some interfaces, and these interfaces may be fronthaul interfaces. In some examples, the higher-layer PHY layer includes a part of PHY layer processing, for example, processing functions such as forward error correction (Forward Error Correction, FEC) encoding and decoding, scrambling, modulation, and demodulation.

In some deployments, the RU is a logical node that carries a lower-layer PHY function and RF processing. In some examples, the RU may be a TRP or a remote radio head (Remote Radio Head, RRH) in 3GPP or another entity with similar functions. In some examples, the lower-layer PHY function includes a part of PHY processing, such as processing functions such as FFT, IFFT, digital beamforming, and filtering. The RU communicates with one or more UEs through a radio link. The DU and the RU may be co-located, or may not be co-located.

The DU and the RU exchange control plane information and user plane information through a lower-layer split-control (C), user (U), and synchronization (S) (Lower-Layer Split CUS-Plane, LLS-CUS) interface through a fronthaul link. The LLS-CUS interface may include an LLS-C interface and an LLS-U interface respectively for the CP and the UP. In some examples, the CP refers to real-time control between the DU and the RU. The DU and RU exchange management information through an LLS-M interface of the fronthaul link. A management plane (M-Plane) refers to non-real-time management operations between the DU and the RU.

The DU and the RU may cooperate to jointly implement functions of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to: implement a lower-layer function of the PHY layer, or implement the lower-layer function and a radio frequency function. The higher-layer function of the PHY layer may include a part of functions of the PHY layer, and the part of functions is closer to a MAC layer. The lower-layer function of the PHY layer may include another part of functions of the PHY layer, and the part of functions is closer to an intermediate radio frequency side.

It should be noted that the foregoing configuration of the CU and the DU is merely an example, and functions of the CU and the DU may alternatively be configured as required. For example, the CU or the DU may be configured to have functions of more protocol layers, or the CU or the DU may be configured to have a part of processing functions of a protocol layer. For example, a part of functions of the RLC layer and a function of a protocol layer above the RLC layer are set on the CU, and remaining functions of the RLC layer and a function of a protocol layer below the RLC layer are set on the DU. For another example, the functions of the CU or the DU may be divided based on service types or other system requirements. For example, division may be performed based on latencies. Functions whose processing time needs to meet a low-latency requirement are set on the DU, and functions whose processing time does not need to meet the latency requirement are set on the CU.

For ease of description, concepts of both a "network device" and a "station" may be mentioned in this application. The station refers to a transmission node that is specifically located at a physical location. The network device may be understood as a general term of all devices (including stations) on a network side. For example, a plurality of stations may be collectively referred to as a network device. In other words, the network device in this application conceptually includes a station.

The terminal device may include various handheld devices, vehicle-mounted devices, wearable devices, compute devices, or other processing devices connected to a wireless modem that have a wireless communication function. The terminal device may be a mobile station (Mobile Station, MS), a subscriber unit (subscriber unit), a cellular phone (cellular phone), a smartphone (smartphone), a wireless data card, a personal digital assistant (Personal Digital Assistant, PDA) computer, a tablet computer, a wireless modem (modem), a handheld device (handset), a laptop computer (laptop computer), a machine type communication (Machine Type Communication, MTC) terminal, or the like. A communication module, a circuit, or a chip that performs a corresponding communication function is usually disposed in the terminal device. Program instructions used to perform a corresponding communication function may be further configured in the terminal device.

The technical solutions provided in this application are described in detail with reference to specific implementations.

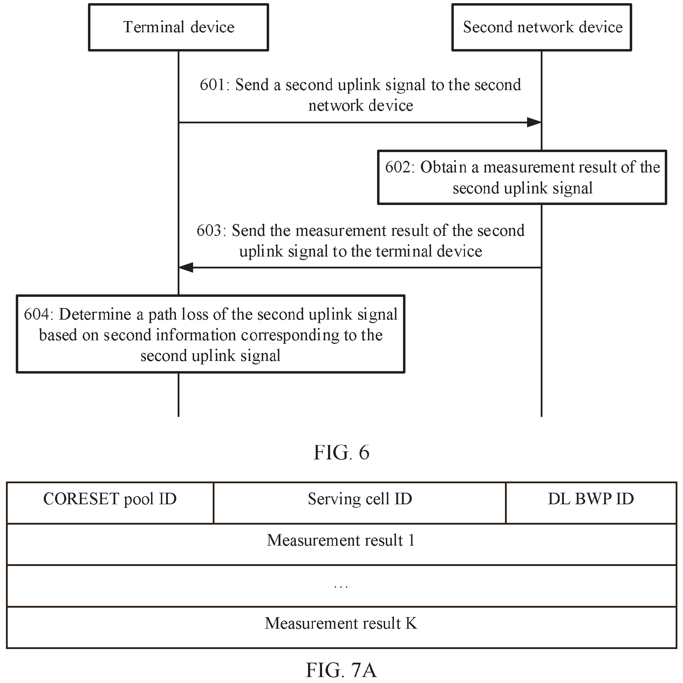

FIG. 6 is a schematic flowchart of a communication method according to an embodiment of this application. The method may be implemented based on the architecture shown in FIG. 3 or FIG. 4. As shown in FIG. 6, the method includes steps 601 to 604.

601: A terminal device sends a second uplink signal to a second network device.

In this embodiment of this application, the second uplink signal may be an SRS, a PUCCH signal, a PUSCH signal, a physical random access channel (physical random access channel, PRACH) signal, a DMRS, a PTRS, or another uplink signal. The SRS may be an SRS used for beam management, or an SRS used for codebook-based uplink transmission, or an SRS used for non-codebook-based uplink transmission, or an SRS used for antenna selection. The second network device may be the TRP 2 in the scenario shown in FIG. 1.

The terminal device may send the second uplink signal at a second transmit power. The second transmit power may be a transmit power configured by a network device or a transmit power specified in a protocol. The transmit power specified in a protocol may be a fixed value, or a maximum transmit power allowed in a protocol, or a transmit power obtained through calculation based on a path loss between the terminal and a first network device (for example, the TRP 1 in the scenario shown in FIG. 1). Alternatively, the second transmit power may be a transmit power obtained through calculation based on a path loss between the terminal device and the second network device. Alternatively, it may be specified that different second transmit powers are used under different conditions. For example, when the terminal device has not obtained path loss information corresponding to the immediately preceding uplink signal, the terminal device sends the second uplink signal at the transmit power configured by a network device or the transmit power specified in a protocol. When the terminal device has obtained path loss information corresponding to the immediately preceding uplink signal, a transmit power of the second uplink signal is calculated based on the path loss.

It should be noted that the path loss between the terminal device and the network device changes as the terminal device moves. Therefore, even if the terminal device has previously determined the path loss between the terminal device and the network device, the terminal device needs to periodically send an uplink signal to re-determine a value of the path loss between the terminal device and the network device.

Optionally, the terminal device may notify the second network device of information about the transmit power used for the second uplink signal. The information about the transmit power used for the second uplink signal may be a value of the transmit power used for the second uplink signal, or a variation of the value of the transmit power used for the second uplink signal, for example, a variation relative to a transmit power used for sending a fourth uplink signal. The fourth uplink signal is the immediately preceding uplink signal sent by the terminal device to the second network device before the second uplink signal is sent.

Specifically, the terminal device may notify, through dedicated uplink signaling, the second network device of the information about the transmit power used for the second uplink signal. The uplink signaling may be RRC signaling, MAC control element (control element, CE) signaling, or UCI signaling. Alternatively, the terminal device may implicitly indicate the information about the transmit power of the second uplink signal through a signal feature of the second uplink signal. For example, the information about the transmit power of the second uplink signal is indicated through a feature of a sequence used in the second uplink signal. The feature of the sequence used in the second uplink signal may be a sequence cyclic shift, a phase offset, or another feature. This is not limited in this application.

There are M second uplink signals, and M is greater than or equal to 1. In other words, it is not limited whether the second uplink signal is a single uplink signal or a plurality of uplink signals.

For example, the terminal device may send an uplink signal to a single network device, for example, the TRP 2 shown in FIG. 1. Alternatively, the terminal device may send uplink signals to a plurality of network devices, for example, send a first uplink signal to the TRP 1 in FIG. 1, and send a second uplink signal to the TRP 2 in FIG. 1.

The terminal device may send the first uplink signal at a first transmit power. The first transmit power may be a transmit power configured by a network device or a transmit power specified in a protocol. The transmit power specified in a protocol may be a fixed value, or a maximum transmit power allowed in a protocol, or a transmit power obtained through calculation based on a path loss between the terminal and the second network device (for example, the TRP 2 in the scenario shown in FIG. 1). Alternatively, the first transmit power may be a transmit power obtained through calculation based on a path loss between the terminal device and the first network device. Alternatively, it may be specified that different first transmit powers are used under different conditions. For example, when the terminal device has not obtained path loss information corresponding to the immediately preceding uplink signal, the terminal device sends the first uplink signal at the transmit power configured by a network device or the transmit power specified in a protocol. When the terminal device has obtained path loss information corresponding to the immediately preceding uplink signal, a transmit power of the first uplink signal is calculated based on the path loss.

602: The second network device obtains a measurement result of the second uplink signal.

Correspondingly, the second network device receives the second uplink signal. After receiving the second uplink signal, the second network device measures the second uplink signal, to obtain the measurement result.

For example, the measurement result of the second uplink signal may include one or more of the following:
a received power of the second uplink signal, for example, an RSRP;
a path loss of the second uplink signal;
a difference between the received power of the second uplink signal and a received power of the first uplink signal;
a difference between the path loss of the second uplink signal and a path loss of the first uplink signal;
a variation of the received power of the second uplink signal relative to a received power of the fourth uplink signal; and
a variation of the path loss of the second uplink signal relative to a path loss of the fourth uplink signal.

For example, the terminal device sends one or more SRSs to the TRP 2, and measurement results of second uplink signals are RSRPs of the one or more SRSs, or path losses corresponding to the one or more SRSs. For example, the terminal device sends one SRS to the TRP 1, and sends one SRS to the TRP 2. The measurement results of the second uplink signals are RSRPs, path losses, RSRP differences, or path loss differences of the two SRSs. For another example, the terminal device sends one SRS to the TRP 1, and sends M SRSs to the TRP 2. The measurement results of the second uplink signals are RSRPs or path losses of the M+1 SRSs, or RSRP differences or path loss differences between the M SRSs sent to the TRP 2 and one SRS sent to the TRP 1.

In this implementation, the second network device may directly indicate the path loss of the second uplink signal to the terminal device, or may indicate, to the terminal device, calculation parameters (for example, the RSRP, the RSRP difference, and the path loss difference) of the path loss of the second uplink signal, so that the terminal device determines the path loss of the second uplink signal based on these calculation parameters.

603: The second network device sends the measurement result of the second uplink signal to the terminal device.

The second network device may send the measurement result via the first network device. In this embodiment of this application, the second network device sends the measurement result of the second uplink signal to the terminal device through indication information. The indication information may be RRC signaling, MAC CE signaling, or DCI signaling. The measurement result of the second uplink signal may alternatively be briefly described as second information. In other words, the measurement result of the second uplink signal in this application may be replaced with second information corresponding to the second uplink signal.

For example, a possible manner in which the second network device sends, to the terminal device, the second information corresponding to the second uplink signal is: indicating the second information using a dedicated MAC CE (the MAC CE is referred to as a first MAC CE below).

For example, the first MAC CE includes one or more of the following:
an index of the second uplink signal; for example, the second uplink signal being an SRS, and the first MAC CE including an index of the SRS, where the first MAC CE may include K indexes of SRSs, and K is greater than or equal to 1;
an index of a resource set corresponding to the second uplink signal; for example, an index of an SRS resource set;
an index of a second TCI-state;
the second information corresponding to the second uplink signal, where the second information may be one or more of the path loss of the second uplink signal, the RSRP of the second uplink signal, the path loss difference between the second uplink signal and the first uplink signal, the RSRP difference between the second uplink signal and the first uplink signal, a variation of the RSRP of the second uplink signal, a variation of the path loss of the second uplink signal, a variation of the path loss difference between the second uplink signal and the first uplink signal, and a variation of the RSRP difference between the second uplink signal and the first uplink signal, where the first uplink signal is an uplink signal sent by the terminal device to the first network device; and
a quantity K of pieces of second information corresponding to the second uplink signal, that is, the MAC CE including second information corresponding to at least one second uplink signal.

To reduce MAC CE overheads, the second information and the index of the TCI-state corresponding to the second information or a resource index of the second uplink signal corresponding to the second information may be carried in a same byte. In other words, an index of a TCI-state corresponding to one piece of second information or a resource index of a second uplink signal corresponding to the second information is carried in each byte in the second MAC CE.

FIG. 7A is a diagram of a first MAC CE according to an embodiment of this application. The first MAC CE may include a control resource set pool identifier (Control Resource Set Pool Index, CORESET Pool ID) field, a serving cell identifier (Serving cell identifier, Serving cell ID) field, and a downlink bandwidth part identifier (Downlink Bandwidth Part Identifier, DLBWP ID) field. The first MAC CE may further include K bytes, indicating K pieces of second information corresponding to second uplink signals. It should be understood that FIG. 7A is merely an example of the first MAC CE, and does not limit the format of the first MAC CE.

In this implementation, the second network device may place the K pieces of second information corresponding to the K second uplink signals into the first MAC CE, to indicate the K pieces of second information to the terminal device through the first MAC CE, so that the terminal device obtains the path losses of the second uplink signals based on the second information. In addition, K indexes of the second uplink signals and/or indexes of resource sets corresponding to the second uplink signals may be placed in the first MAC CE, to indicate the second uplink signals corresponding to the second information or the resource sets to which the second uplink signals corresponding to the second information belong.

Herein, M is greater than or equal to K. That is, the second information corresponding to the second uplink signals may be second information corresponding to all the M second uplink signals, or may be second information corresponding to a part of the M second uplink signals. The part of the second uplink signals may be better SRSs in activated second TCI-states.

The second TCI-state is an uplink TCI-state corresponding to a 2^{nd} control channel group. The 2^{nd} control channel group is a control channel group with a control channel group index (coresetPoolIndex)=1. The second TCI-state may also be a TCI-state used for transmission with the second network device. For example, the network device activates a plurality of groups of TCI-states for the terminal device, and each group of TCI-states corresponds to one TCI field value. Each group of TCI-states may include one or two uplink TCI-states, and a 2^{nd} uplink TCI-state is the second TCI-state.

The uplink TCI-state in this application is a general TCI-state used for uplink transmission, and may be specifically an uplink TCI-state used only for uplink transmission, or may be a joint uplink/downlink TCI-state used for uplink and downlink transmission.

The quantity K of pieces of second information included in the first MAC CE may be directly indicated through the first MAC CE, or may be determined according to a preset rule.

For example, K is equal to a quantity of second TCI-states activated by the network device for the terminal device. In this case, the K pieces of second information are in a one-to-one correspondence with the K second TCI-states. For example, an i^{th} piece of second information in the K pieces of second information corresponds to an i^{th} second TCI-state in the K activated second TCI-states. For example, the i^{th} piece of second information in the second information corresponds to the i^{th} second TCI-state in the K activated second TCI-states. In other words, the i^{th} piece of second information in the K pieces of second information corresponds to a reference signal resource in the i^{th} second TCI-state in the K activated second TCI-states. The i^{th} second TCI-state in the K activated second TCI-states is the i^{th} second TCI-state in a sequence of the activated second TCI-states. The sequence of the activated second TCI-states is a sequence of the activated second TCI-states in activation signaling, or a sequence of TCI field values corresponding to the activated second TCI-states. Further, it may be specified that if second TCI-states corresponding to a plurality of TCI field values are the same, the same second TCI-states are not counted repeatedly. That is, the K second TCI-states are different K second TCI-states.

The reference signal resource is an SRS that is used for beam reference or path loss reference and indicated in the TCI-state.

For example, K is equal to a quantity of different reference signal resources included in the activated second TCI-states. For example, eight second TCI-states are currently activated, and each second TCI-state includes one reference signal resource. Some reference signal resources are repeated, that is, reference signal resources included in some second TCI-states are the same. In this case, same reference signal resources are not repeatedly counted, and only different reference signal resources are counted. In this case, the i^{th} piece of second information in the K pieces of second information corresponds to an i^{th} reference SRS in K reference SRSs. The i^{th} reference SRS is an i^{th} reference SRS in a sequence of the K reference SRSs. The sequence of the K reference SRSs is determined based on the sequence of the currently activated second TCI-states. The sequence of the activated second TCI-states is the sequence of the activated second TCI-states in activation signaling, or the sequence of TCI field values corresponding to the activated second TCI-states. Determining the sequence of the K SRSs based on the sequence of the currently activated second TCI-states means that, based on the sequence of the currently activated second TCI-states, reference SRSs in the second TCI-states that are ranked earlier are ranked earlier, and reference SRSs in the second TCI-states that are ranked later are ranked later. If a reference SRS has already appeared in a previous second TCI-state, the reference SRS is ignored and not included in the sequence. For example, indexes of reference SRSs included in the currently activated eight TCI-states are respectively {#1, #2, #1, #3, #2, #4, #1, #6}. In this case, K=5, and a sequence of the K=5 reference SRSs is #1, #2, #3, #4, and #6. The reference signal resource is an SRS that is used for beam reference or path loss reference and indicated in the TCI-state.

In this implementation, the quantity K of pieces of second information corresponding to the second uplink signals in the first MAC CE may be equal to the quantity of activated second TCI-states, or may be equal to the quantity of different reference signal resources included in the activated second TCI-states, so that the second network device can indicate the reference signal resources in the activated second TCI-state to the terminal device. There is a correspondence between the i^{th} piece of second information in the K pieces of second information in the first MAC CE and the i^{th} TCI-state in the K activated second TCI-states or the reference signal resource in the i^{th} second TCI-state in the K activated second TCI-states.

It should be noted that when the second network device does not have a downlink function, the second network device may notify, via another network device (for example, the first network device) that establishes a communication link with the second network device, the terminal device of the second information corresponding to the second uplink signal.

604: The terminal device determines the path loss of the second uplink signal based on the second information corresponding to the second uplink signal.

Correspondingly, the terminal device receives the measurement result of the second uplink signal from the second network device.

For example, when the second information corresponding to the second uplink signal includes the RSRP of the second uplink signal (that is, the second network device indicates the RSRP of the second uplink signal through the indication information), the terminal device may determine the path loss of the second uplink signal based on the RSRP of the second uplink signal and the transmit power of the second uplink signal. For example, the second uplink signals are K SRSs, and the second network device indicates RSRPs of the K SRSs. The terminal device subtracts the RSRPs (unit: dBm) of the K SRSs from transmit powers (unit: dBm) of the K SRSs, to obtain path losses (unit: dB) corresponding to the K SRSs.

In this implementation, when the second network device notifies the terminal device of the RSRP of the second uplink signal, the terminal device may obtain the path loss of the second uplink signal based on the RSRP and the transmit power of the second uplink signal, to determine, based on the path loss, a transmit power for sending an uplink signal next time.

For example, when the second information corresponding to the second uplink signal includes the path loss of the second uplink signal (that is, the second network device indicates the path loss of the second uplink signal through the indication information), the terminal device may determine the path loss corresponding to the second uplink signal after receiving the indication information. If information, about the path loss, indicated by the indication information is a variation of the path loss, the terminal device performs updating based on the variation of the path loss, to obtain an updated path loss of the second uplink signal. For example, the second uplink signals are K SRSs, and the second network device indicates variations of the path losses of the K SRSs. The terminal device updates path losses values of the K SRSs based on the variations of the path losses of the K SRSs.

For example, when the second information corresponding to the second uplink signal includes an RSRP difference corresponding to the second uplink signal (that is, the second network device indicates, through the indication information, the RSRP difference corresponding to the second uplink signal), the terminal device determines the path loss value of the second uplink signal based on the RSRP difference, the transmit power of the second uplink signal, the transmit power of the first uplink signal sent to the first network device, and the path loss between the terminal device and the first network device. The path loss between the terminal device and the first network device may be obtained by measuring a downlink signal of the first network device by the terminal device. It is assumed that path losses between the terminal device and the TRP 1 and between the terminal device and the TRP 2 are respectively represented as PL₁ and PL₂, a transmit power of the first uplink signal sent to the TRP 1 and a transmit power of the second uplink signal sent to the TRP 1 are respectively P₁ and P₂, and an RSRP difference corresponding to the second uplink signal is RSRP_{gap}. In this case, the path loss PL₂ corresponding to the second uplink signal satisfies: ${PL}_{2} = {PL}_{1} + {P}_{2} - {P}_{1} - {RSRP}_{gap}$

The RSRP difference corresponding to the second uplink signal is a difference between the RSRP of the second uplink signal and an RSRP of the first uplink signal.

The foregoing is a manner of calculating the path loss of the second uplink signal, and path losses of a plurality of second uplink signals may be obtained in a same manner.

For example, when the second information corresponding to the second uplink signal includes the path loss difference corresponding to the second uplink signal (that is, the second network device indicates, through the indication information, the path loss difference corresponding to the second uplink signal), the terminal device determines the path loss value of the second uplink signal based on the path loss difference and the path loss between the terminal device and the first network device. The path loss between the terminal device and the first network device may be obtained by measuring a downlink signal of the first network device by the terminal device. It is assumed that the path loss difference corresponding to the second uplink signal is PL_{gap}. In this case, the path loss PL₂ corresponding to the first uplink signal satisfies: ${PL}_{2} = {PL}_{1} + {PL}_{gap}$

The foregoing is a manner of calculating the path loss of the second uplink signal, and path losses of a plurality of second uplink signals may be obtained in a same manner.

It can be learned that in this embodiment of this application, the terminal device may send the uplink signal to the network device, and the network device measures the uplink signal and sends the second information to the terminal device, so that the terminal device can obtain the path loss between the terminal device and the network device based on the second information. In this manner, the path loss between the terminal device and the network device can be obtained regardless of whether the network device has a downlink function, thereby improving applicability of the solution.

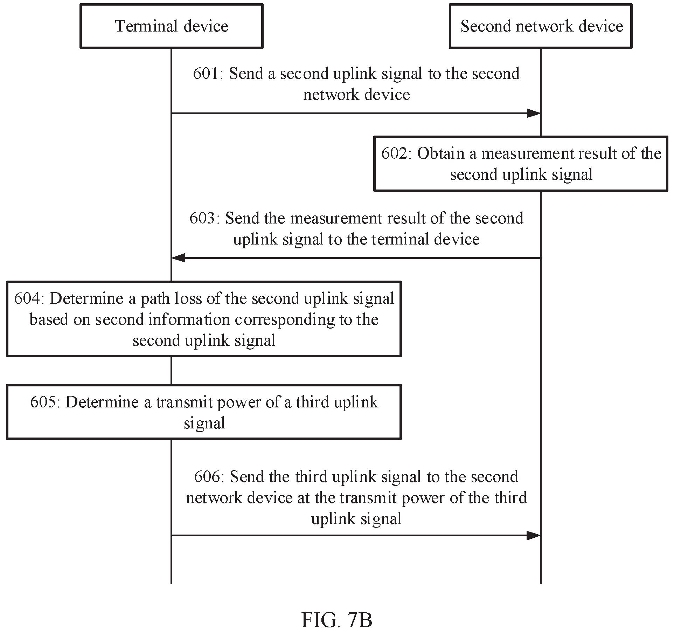

For example, FIG. 7B is a schematic flowchart of another communication method according to an embodiment of this application. As shown in FIG. 7B, based on the embodiment shown in FIG. 6, the method may further include the following steps.

605: The terminal device determines a transmit power of a third uplink signal.

Specifically, the terminal device first determines a TCI-state used by the third uplink signal, determines which one of the second uplink signals is a reference signal resource in the TCI-state, and then calculates, based on the path loss corresponding to the second uplink signal, the transmit power corresponding to the third uplink signal.

606: The terminal device sends the third uplink signal to the second network device at the transmit power of the third uplink signal.

In this embodiment of this application, the terminal device may calculate the transmit power based on the path loss of the second uplink signal, and transmit the third uplink signal to the second network device at the transmit power. The third uplink signal may be any uplink signal other than the second uplink signal, or may be an uplink signal (for example, an SRS) same as the second uplink signal.

In this implementation, the terminal device may determine the transmit power of the third uplink signal based on a path loss value corresponding to the TCI-state used by the third uplink signal, so that the third uplink signal may be sent at the transmit power.

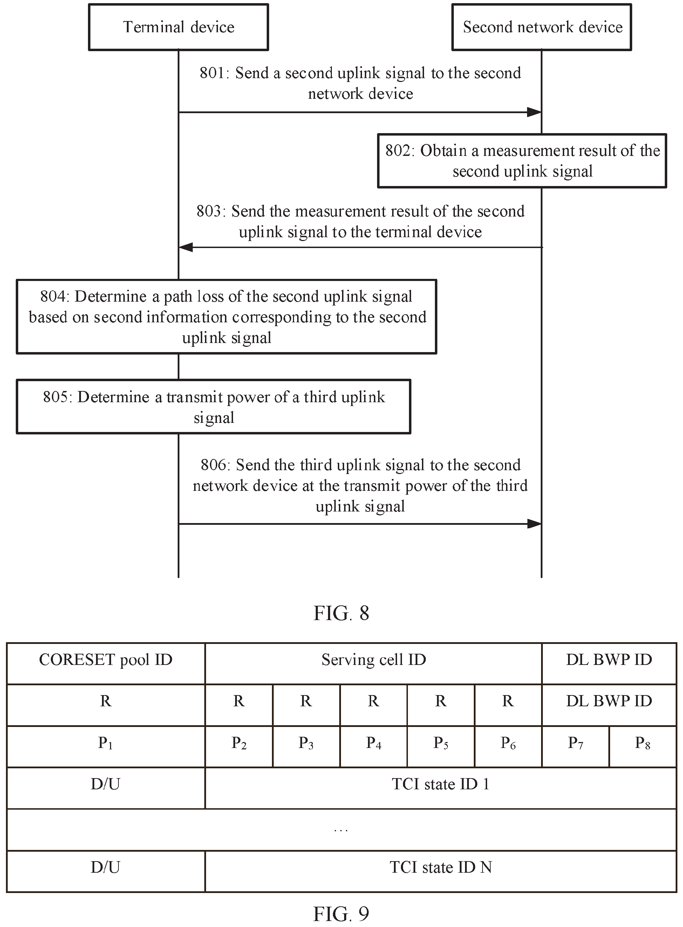

FIG. 8 is a schematic flowchart of another communication method according to an embodiment of this application. As shown in FIG. 8, the method includes steps 801 to 806.

801: A terminal device sends a second uplink signal to a second network device.

802: The second network device obtains a measurement result of the second uplink signal.

For specific implementations of steps 801 and 802, refer to corresponding descriptions of steps 601 and 602 in FIG. 6, and same or similar beneficial effect can be achieved.

803: The second network device sends the measurement result of the second uplink signal to the terminal device.

That is, the second network device sends, to the terminal device, second information corresponding to the second uplink signal. The second network device may send the second information via a first network device.

For example, the second network device may further send, to the terminal device through a second MAC CE, the second information corresponding to the second uplink signal. The second MAC CE is an enhanced MAC CE of a fifth MAC CE, and the fifth MAC CE is a MAC CE used to activate a TCI-state of a specific control channel group, that is, the second MAC CE is an enhanced MAC CE used to activate the TCI-state of the specific control channel group. Control channel groups are CORESET groups. Each control channel group corresponds to a CORESET group identifier (CORESET Pool identifier).

The fifth MAC CE is used in a multi-DCI multi-station transmission scenario. In this scenario, a network side communicates with the terminal device via two TRPs. The two TRPs respectively correspond to two control channel groups. The network side may send one fifth MAC CE to activate a TCI-state of one of the TRPs. As shown in FIG. 9, the fifth MAC CE activates a TCI-state of a 1^{st} TRP/control channel group or a TCI-state of a 2^{nd} TRP/control channel group, which is indicated through a 1^{st} field "CORESETPoolID" in the MAC CE. The MAC CE may activate eight TCI-state groups, and each TCI-state group includes one uplink TCI-state, or includes one downlink TCI-state, or includes one uplink TCI-state and one downlink TCI-state. Whether each TCI-state group specifically includes one TCI-state or two TCI-states is indicated through a P field, that is, whether an i^{th} TCI-state group specifically includes one TCI-state or two TCI-states is indicated through a Pᵢ field. The eight TCI-state groups respectively correspond to eight field values of TCI fields in the DCI. In this way, the network device may specifically indicate one of the eight TCI-state groups through the TCI field in the DCI. Certainly, the fifth MAC CE further includes a Serving cell ID field, a reserved location R field, and the like, and a "D/U" field represents downlink/uplink.

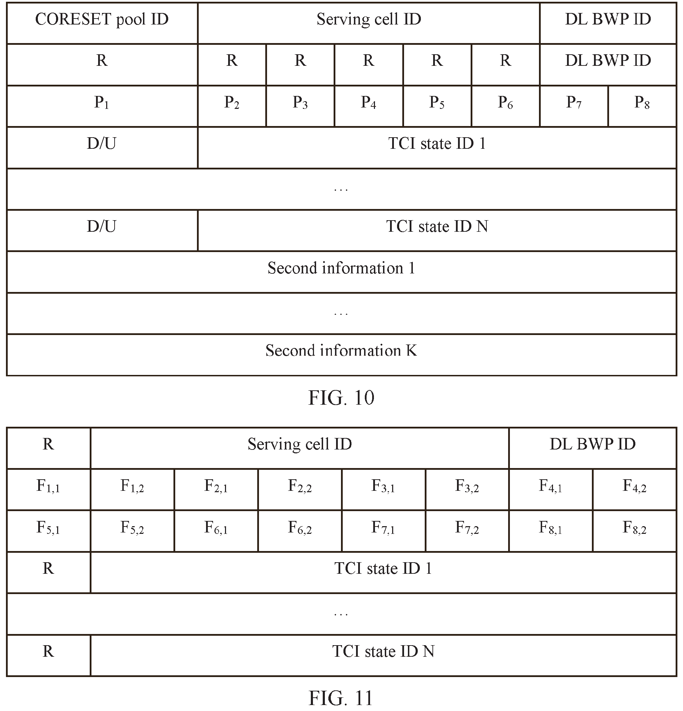

In this embodiment of this application, the fifth MAC CE is enhanced, so that the fifth MAC CE can indicate the second information corresponding to the second uplink signal. For a format of the second MAC CE, refer to FIG. 10. Specifically, K bit parts are added to a first MAC CE to indicate K pieces of second information. Each bit part indicates one piece of second information. Each bit part may be 1 byte (8 bits). There are the following several methods for determining K.

Method 1: K is set to 8 by default. That is, the second MAC CE includes eight pieces of second information, which respectively correspond to eight TCI-state groups activated by the second MAC CE (also activated by the fifth MAC CE), or respectively correspond to uplink TCI-states in the eight TCI-state groups, or respectively correspond to reference signal resources in uplink TCI-states in the eight TCI-state groups, or respectively correspond to eight TCI field values in the DCI. The reference signal resource may be a path loss reference signal resource or a beam reference signal resource.

Method 2: K is equal to a quantity of uplink TCI-states activated by the second MAC CE (also activated by the fifth MAC CE). For example, the second MAC CE activates eight TCI-state groups, but some TCI-state groups do not have uplink TCI-states. In this case, K is not equal to 8. In this case, the K pieces of second information respectively correspond to K activated uplink TCI-states, or the K pieces of second information respectively correspond to reference signal resources in the K activated uplink TCI-states. That is, an i^{th} piece of second information corresponds to an i^{th} activated uplink TCI-state. The i^{th} piece of second information may be an i^{th} piece of second information in a sequence of the K pieces of second information in the second MAC CE. The i^{th} uplink TCI-state may be an i^{th} uplink TCI-state in a sequence of the K activated uplink TCI-states in the second MAC CE. Alternatively, a sequence of TCI field values corresponding to the K activated uplink TCI-states is used.

Method 3: K is equal to a quantity of different uplink TCI-states activated by the second MAC CE (also activated by the fifth MAC CE). For example, the second MAC CE activates eight TCI-state groups, and uplink TCI-states in a plurality of TCI-state groups are the same. These same uplink TCI-states are not counted repeatedly. That is, only different uplink TCI-states are considered, to determine a value of K. In this case, the K pieces of second information respectively correspond to different K activated uplink TCI-states, or the K pieces of second information respectively correspond to reference signal resources in the different K activated uplink TCI-states. Specifically, the i^{th} piece of second information in the K pieces of second information corresponds to the i^{th} uplink TCI-state in the different K activated uplink TCI-states. The i^{th} piece of second information in the K pieces of second information may be an i^{th} piece of second information in a sequence of the K pieces of second information in the second MAC CE. The i^{th} uplink TCI-state in the different K uplink TCI-states may be an i^{th} uplink TCI-state in a sequence of the different K uplink TCI-states. A sequence of the different K uplink TCI-states may be determined based on a sequence of the plurality of TCI-state groups activated by the second MAC CE. Specifically, based on the sequence of the plurality of TCI-state groups activated by the MAC CE, uplink TCI-states in the TCI-state groups that are ranked earlier are ranked earlier, and uplink TCI-states in the TCI-state groups that are ranked later are ranked later. If an uplink TCI-state has already appeared in a previous TCI-state group, the uplink TCI-state is ignored and not included in the sequence. For example, indexes of the uplink TCI-states included in the currently activated eight TCI-state groups are respectively {#1, #3, #1, #2, #2, #4, #1, #5}. In this case, K=5, and a sequence of the K=5 uplink TCI-states is #1, #3, #2, #4, and #5.

Method 4: K is equal to a quantity of different reference signal resources included in the uplink TCI-states activated by the second MAC CE (also activated by the fifth MAC CE). For example, the second MAC CE activates a plurality of uplink TCI-states, some reference signal resources included in the plurality of uplink TCI-states are repeated, and the terminal device counts only a quantity of different reference signal resources, where the quantity of reference signal resources is K. In this case, the K pieces of second information respectively correspond to different K reference signal resources included in the activated uplink TCI-states. That is, an i^{th} piece of second information corresponds to an i^{th} piece of reference signal resources in the different K reference signal resources. The i^{th} piece of second information may be an i^{th} piece of second information in a sequence of the K pieces of second information in the second MAC CE. The i^{th} reference signal in the different K reference signal resources may be an i^{th} reference signal in a sequence of the different K reference signal resources. The sequence of the K reference signal resources may be determined based on a sequence of the plurality of uplink TCI-states activated by the second MAC CE. Specifically, based on the sequence of the plurality of uplink TCI-states activated by the MAC CE, reference signal resources in the uplink TCI-states that are ranked earlier are ranked earlier, and reference signal resources in the uplink TCI-states that are ranked later are ranked later. If a reference signal resource has already appeared in a previous uplink TCI-state, the reference signal resource is ignored and not included in the sequence. For example, indexes of reference SRSs included in currently activated six uplink TCI-states are respectively {#1, #3, #1, #2, #2, #4}. In this case, K=4, and a sequence of the K=4 reference SRSs is #1, #3, #2, and #4.

Optionally, because the terminal device needs to determine only the second information corresponding to the second network device, if a value of a 1^{st} field (namely, a CORESETPoolID field) in the second MAC CE is 0 (that is, corresponding to the first network device), a bit part, in the MAC CE, indicating the second information is not present or may be default.

Optionally, when the second network device has no downlink function, each TCI-state group may include only one uplink TCI-state, and a quantity of TCI-states included in the TCI-state group does not need to be indicated through a P field. If the value of the 1^{st} field (namely, the CORESETPoolID field) in the second MAC CE is 1 (that is, corresponding to the second network device), all P fields in the MAC CE are not present. Alternatively, even if the P fields are present, the terminal device ignores the P fields.

Optionally, only when the second MAC CE meets a first condition, the bit part indicating the second information is present. The first condition includes one or a combination of the following:
a value of the 1^{st} field (namely, CORESETPoolID) in the second MAC CE is 1;
one field in the second MAC CE indicates that the MAC CE includes a bit part indicating the second information;
one TRP is a TRP having only an uplink function, or an RRC configuration specifies that downlink transmission is based on a single TRP and uplink transmission is based on two TRPs;
path loss reference signal resources in all TCI-states activated by the second MAC CE are SRS resources; and
all TCI-states activated by the second MAC CE are uplink TCI-states.

In this implementation, a MAC CE used to activate a TCI-state of a specific control channel group is enhanced, and an additional field is introduced to indicate one or more pieces of second information. The one or more pieces of second information correspond to one or more uplink TCI-states activated by the MAC CE, or reference signal resources in one or more activated uplink TCI-states.

For example, the second network device may further send, to the terminal device through a third MAC CE, the second information corresponding to the second uplink signal. The third MAC CE is an enhanced MAC CE of a sixth MAC CE, and the sixth MAC CE is a MAC CE used to activate a joint uplink/downlink TCI-state, that is, the third MAC CE is an enhanced MAC CE used to activate the joint uplink/downlink TCI-state.

The sixth MAC CE is used in a joint TCI mode in a single-DCI multi-station transmission scenario. In the single-DCI multi-station transmission scenario, a network side communicates with a terminal device via two TRPs, and the two TRPs correspond to a same control channel group identifier (coresetpoolIndex). In the joint TCI mode, a unified TCI-state is used for both uplink and downlink, that is, a joint uplink/downlink TCI-state is used. An uplink TCI-state and a downlink TCI-state are not distinguished. The network side may send one sixth MAC CE to activate the joint uplink/downlink TCI-state of the two TRPs. As shown in FIG. 11, in addition to a conventional R field, a Serving cell ID field, and a DL BWP ID field, the sixth MAC CE may activate eight TCI-state groups, and each TCI-state group includes one first TCI-state, or includes one second TCI-state, or includes one first TCI-state and one second TCI-state. The first TCI-state is a joint uplink/downlink TCI-state corresponding to the TRP 1, and the second TCI-state is a joint uplink/downlink TCI-state corresponding to the TRP 2. Whether each TCI-state group includes the first TCI-state and whether each TCI-state group includes the second TCI-state each are indicated through one field. Specifically, whether the i^{th} TCI-state group includes the first TCI-state and whether the i^{th} TCI-state group includes the second TCI-state are respectively indicated through an F_{i,1} field and an F_{i,2} field. The eight TCI-state groups respectively correspond to eight field values of TCI fields in the DCI. In this way, the network device may specifically indicate one of the eight TCI-state groups through the TCI field in the DCI.

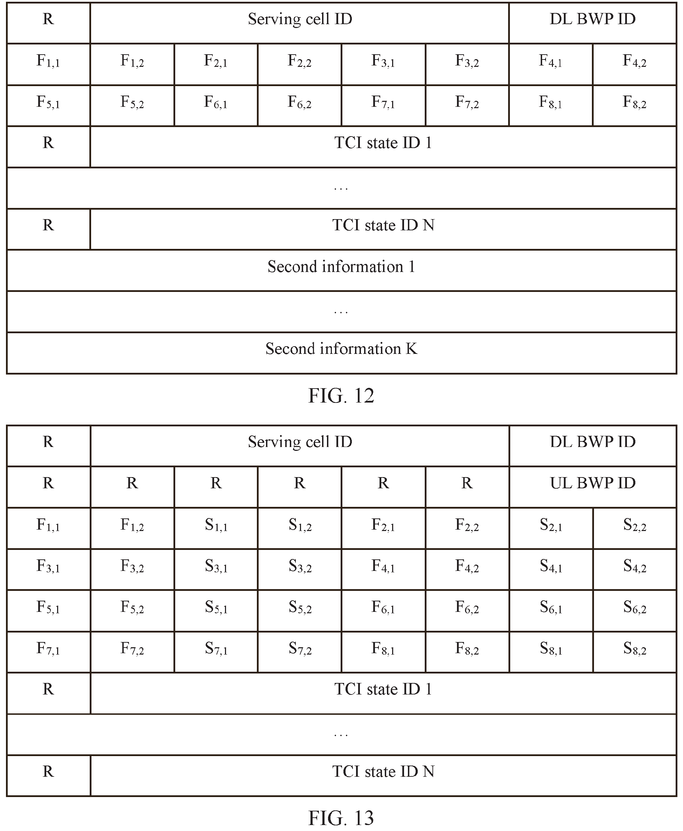

In this embodiment of this application, the sixth MAC CE is enhanced, so that the sixth MAC CE can indicate the second information corresponding to the second uplink signal. For a format of the third MAC CE, refer to FIG. 12. Specifically, K bit parts are added to the sixth MAC CE, to indicate the K pieces of second information. Each bit part indicates one piece of second information. Each bit part may be 1 byte (8 bits). There are the following several methods for determining K.

Method 1: K is set to 8 by default. That is, the third MAC CE includes eight pieces of second information, which respectively correspond to eight TCI-state groups activated by the third MAC CE (also activated by the sixth MAC CE), or respectively correspond to second TCI-states in the eight TCI-state groups, or respectively correspond to reference signal resources in second TCI-states in the eight TCI-state groups, or respectively correspond to eight TCI field values in the DCI. The reference signal resource may be a path loss reference signal resource or a beam reference signal resource.

Method 2: K is equal to a quantity of second TCI-states activated by the third MAC CE (also activated by the sixth MAC CE). In other words, K is equal to a quantity of fields whose values are 1 in the eight fields {F12, F22, ..., F82} of the MAC CE. For example, the MAC CE activates eight TCI-state groups, but some TCI-state groups do not have second TCI-states. In this case, K is not equal to 8. In this case, the K pieces of second information respectively correspond to the K activated second TCI-states, or the K pieces of second information respectively correspond to reference signal resources in the K activated second TCI-states. That is, an i^{th} piece of second information corresponds to an i^{th} activated second TCI-state. The i^{th} piece of second information may be an i^{th} piece of second information in a sequence of the K pieces of second information in the third MAC CE. The i^{th} second TCI-state may be an i^{th} second TCI-state in a sequence of the K activated second TCI-states in the third MAC CE. For example, the i^{th} second TCI-state is a second TCI-state corresponding to an i^{th} field whose value is 1 in the eight fields F₁₂ to F₈₂.

Method 3: K is equal to a quantity of different second TCI-states activated by the third MAC CE (also activated by the sixth MAC CE). For example, the third MAC CE activates eight TCI-state groups, and second TCI-states in a plurality of TCI-state groups are the same. These same second TCI-states are not counted repeatedly, that is, only different second TCI-states are considered, to determine a value of K. In this case, the K pieces of second information respectively correspond to different K activated second TCI-states, or the K pieces of second information respectively correspond to reference signal resources in the different K activated second TCI-states. Specifically, the i^{th} piece of second information in the K pieces of second information corresponds to an i^{th} second TCI-state in the different K activated second TCI-states. The i^{th} piece of second information in the K pieces of second information may be an i^{th} piece of second information in a sequence of the K pieces of second information in the third MAC CE. The i^{th} second TCI-state in the different K second TCI-states may be an i^{th} second TCI-state in a sequence of the different K second TCI-states. A sequence of the different K second TCI-states may be determined based on a sequence of the plurality of TCI-state groups activated by the third MAC CE. Specifically, based on the sequence of the plurality of TCI-state groups activated by the MAC CE, second TCI-states in the TCI-state groups that are ranked earlier are ranked earlier, and second TCI-states in the TCI-state groups that are ranked later are ranked later. If a second TCI-state has already appeared in a previous TCI-state group, the second TCI-state is ignored and not included in the sequence. For example, indexes of the second TCI-states included in the currently activated eight TCI-state groups are respectively {#1, #3, #1, #2, #2, #4, #1, #5}. In this case, K=5, and a sequence of the K=5 second TCI-states is #1, #3, #2, #4, and #5.

Method 4: K is equal to a quantity of different reference signal resources included in the second TCI-states activated by the third MAC CE. For example, a plurality of second TCI-states are activated by the MAC CE activates (also activated by the sixth MAC CE), some reference signal resources included in the plurality of second TCI-states are repeated, and the terminal device counts only a quantity of different reference signal resources, where the quantity of reference signal resources is K. In this case, the K pieces of second information respectively correspond to different K reference signal resources included in the activated second TCI-states. That is, an i^{th} piece of second information corresponds to an i^{th} piece of reference signal resources in the different K reference signal resources. The i^{th} piece of second information may be an i^{th} piece of second information in a sequence of the K pieces of second information in the third MAC CE. The i^{th} reference signal in the different K reference signal resources may be an i^{th} reference signal in a sequence of the different K reference signal resources. The sequence of the K reference signal resources may be determined based on a sequence of the plurality of second TCI-states activated by the third MAC CE. Specifically, based on the sequence of the plurality of second TCI-states activated by the MAC CE, reference signal resources in the second TCI-states that are ranked earlier are ranked earlier, and reference signal resources in the second TCI-states that are ranked later are ranked later. If a reference signal resource has already appeared in a previous second TCI-state, the reference signal resource is ignored and not included in the sequence. For example, indexes of reference signal resources included in currently activated six second TCI-states are respectively {#1, #3, #1, #2, #2, #4}. In this case, K=4, and a sequence of the K=4 reference signal resources is #1, #3, #2, and #4.

Optionally, only when the third MAC CE meets a second condition, the bit part indicating the second information is present. The second condition includes one or a combination of the following:
one field in the third MAC CE indicates that the MAC CE includes a bit part indicating the second information;
one TRP is a TRP having only an uplink function, or an RRC configuration specifies that downlink transmission is based on a single TRP and uplink transmission is based on two TRPs; and
path loss reference signal resources in all second TCI-states activated by the third MAC CE are SRS resources.

In this implementation, a MAC CE used to activate a joint uplink/downlink TCI-state is enhanced, and an additional field is introduced to indicate one or more pieces of second information. The one or more pieces of second information correspond to one or more second TCI-states activated by the MAC CE, or reference signal resources in one or more activated second TCI-states.

For example, the second network device may further send, to the terminal device through a fourth MAC CE, the second information corresponding to the second uplink signal. The fourth MAC CE is an enhanced MAC CE of a seventh MAC CE, and the seventh MAC CE is a MAC CE used to activate separate uplink/downlink TCI states, that is, the fourth MAC CE is an enhanced MAC CE used to activate the separate uplink/downlink TCI states.

The seventh MAC CE is used in a separate TCI mode in a single-DCI multi-station transmission scenario. In the single-DCI multi-station transmission scenario, a network side communicates with a terminal device via two TRPs, and the two TRPs correspond to a same control channel group identifier (coresetpoolIndex). In the separate mode, separate TCI-states are used for uplink and downlink, that is, an uplink TCI-state and a downlink TCI-state are used separately. The network side may send one seventh MAC CE to activate uplink TCI-states and/or downlink TCI-states of the two TRPs. As shown in FIG. 13, in addition to a conventional R field, a Serving cell ID field, a DL BWP ID field, and an uplink bandwidth part identifier (UpLink BandWidth Part Identifier, UL BWP ID) field, the seventh MAC CE may activate eight TCI-state groups, and each TCI-state group may include any part or all of four TCI-states: a first downlink TCI-state, a second downlink TCI-state, a first uplink TCI-state, and a second uplink TCI-state. The first uplink TCI-state and the first downlink TCI-state refer to an uplink TCI-state and a downlink TCI-state that correspond to the TRP 1, and the second uplink TCI-state and the second downlink TCI-state refer to an uplink TCI-state and a downlink TCI-state that correspond to the TRP 2. Whether each TCI-state group includes the first downlink TCI-state, whether each TCI-state group includes the second downlink TCI-state, whether each TCI-state group includes the first uplink TCI-state, and whether each TCI-state group includes the second uplink TCI-state each are indicated through one field. Specifically, whether the i^{th} TCI-state group includes the first downlink TCI-state, whether the i^{th} TCI-state group includes the second downlink TCI-state, whether the i^{th} TCI-state group includes the first uplink TCI-state, and whether the i^{th} TCI-state group includes the second uplink TCI-state are respectively indicated through an F_{i,1} field, an F_{i,2} field, an S_{i,1} field, and an S_{i,2} field. The eight TCI-state groups respectively correspond to eight field values of TCI fields in the DCI. In this way, the network device may specifically indicate one of the eight TCI-state groups through the TCI field in the DCI.

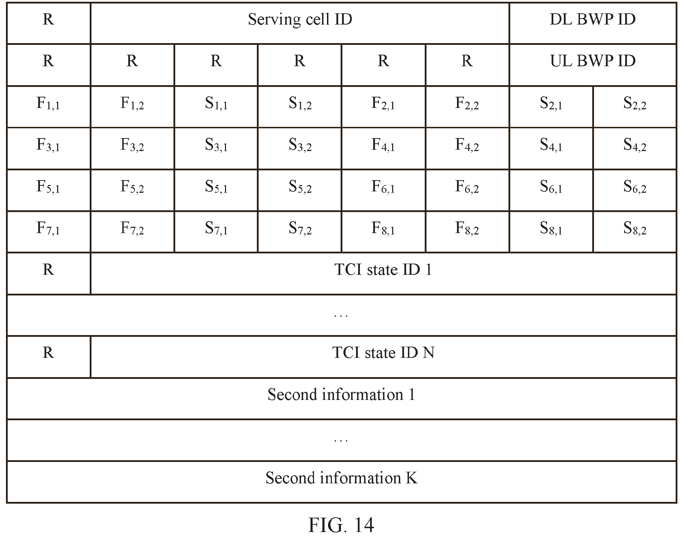

In this embodiment of this application, the seventh MAC CE is enhanced, so that the seventh MAC CE can indicate the second information corresponding to the second uplink signal. For a format of the fourth MAC CE, refer to FIG. 14. Specifically, K bit parts are added to the seventh MAC CE, to indicate the K pieces of second information. Each bit part indicates one piece of second information. Each bit part may be 1 byte (8 bits). There are the following several methods for determining K.

Method 1: K is set to 8 by default. That is, the fourth MAC CE includes eight pieces of second information, which respectively correspond to eight TCI-state groups activated by the MAC CE (also activated by the seventh MAC CE), or respectively correspond to second uplink TCI-states in the eight TCI-state groups, or respectively correspond to reference signal resources in second uplink TCI-states in the eight TCI-state groups, or respectively correspond to eight TCI field values in the DCI.

Method 2: K is equal to a quantity of second uplink TCI-states activated by the fourth MAC CE (also activated by the seventh MAC CE). In other words, K is equal to a quantity of fields whose values are 1 in the eight fields {S12, S22, ..., S82} of the MAC CE. For example, the MAC CE activates eight TCI-state groups, but some TCI-state groups do not have second uplink TCI-states. In this case, K is not equal to 8. In this case, the K pieces of second information respectively correspond to K activated second uplink TCI-states, or the K pieces of second information respectively correspond to reference SRSs in the K activated second uplink TCI-states. That is, an i^{th} piece of second information corresponds to an i^{th} activated second uplink TCI-state. The i^{th} piece of second information may be an i^{th} piece of second information in a sequence of the K pieces of second information in the fourth MAC CE. The i^{th} second uplink TCI-state may be an i^{th} second uplink TCI-state in a sequence of the K activated second TCI-states in the fourth MAC CE. For example, the i^{th} second uplink TCI-state is a second uplink TCI-state corresponding to an i^{th} field whose value is 1 in the eight fields S₁₂ to S₈₂.

Method 3: K is equal to a quantity of different second uplink TCI-states activated by the fourth MAC CE (also activated by the seventh MAC CE). For example, the fourth MAC CE activates eight TCI-state groups, and second uplink TCI-states in a plurality of TCI-state groups are the same. These same second uplink TCI-states are not counted repeatedly, that is, only different second uplink TCI-states are considered, to determine a value of K. In this case, the K pieces of second information respectively correspond to different K activated second uplink TCI-states, or the K pieces of second information respectively correspond to reference signal resources in the different K activated second uplink TCI-states. Specifically, the i^{th} piece of second information in the K pieces of second information corresponds to the i^{th} second uplink TCI-state in the different K activated second uplink TCI-states. The i^{th} piece of second information in the K pieces of second information may be an i^{th} piece of second information in a sequence of the K pieces of second information in the fourth MAC CE. The i^{th} second uplink TCI-state in the different K second uplink TCI-states may be an i^{th} second uplink TCI-state in a sequence of the different K second uplink TCI-states. The sequence of the different K second uplink TCI-states may be determined based on a sequence of the plurality of TCI-state groups activated by the fourth MAC CE. Specifically, based on the sequence of the plurality of TCI-state groups activated by the MAC CE, second uplink TCI-states in the TCI-state groups that are ranked earlier are ranked earlier, and second uplink TCI-states in the TCI-state groups that are ranked later are ranked later. If a second uplink TCI-state has already appeared in a previous TCI-state group, the second uplink TCI-state is ignored and not included in the sequence. For example, indexes of second uplink TCI-states included in the currently activated eight TCI-state groups are respectively {#1, #3, #1, #2, #2, #4, #1, #5}. In this case, K=5, and a sequence of the K=5 second uplink TCI-states is #1, #3, #2, #4, and #5. Method 4: K is equal to a quantity of different reference signal resources included in the second uplink TCI-states activated by the fourth MAC CE. For example, the MAC CE activates a plurality of second uplink TCI-states, some reference signal resources included in the plurality of second uplink TCI-states are repeated, and the terminal device counts only a quantity of different reference signal resources, where the quantity of reference signal resources is K. In this case, the K pieces of second information respectively correspond to different K reference signal resources included in the activated second uplink TCI-states. That is, an i^{th} piece of second information corresponds to an i^{th} piece of reference signal resources in the different K reference signal resources. The i^{th} piece of second information may be an i^{th} piece of second information in a sequence of the K pieces of second information in the fourth MAC CE. The i^{th} reference signal in the different K reference signal resources may be an i^{th} reference signal in a sequence of the different K reference signal resources. The sequence of the K reference signal resources may be determined based on a sequence of the plurality of second uplink TCI-states activated by the fourth MAC CE. Specifically, based on the sequence of the plurality of second uplink TCI-states activated by the fourth MAC CE, reference signal resources in the second uplink TCI-states that are ranked earlier are ranked earlier, and reference signal resources in the second uplink TCI-states that are ranked later are ranked later. If a reference signal resource has already appeared in a previous second uplink TCI-state, the reference signal resource is ignored and not included in the sequence. For example, indexes of reference signal resources included in currently activated six second uplink TCI-states are respectively {#1, #3, #1, #2, #2, #4}. In this case, K=4, and a sequence of the K=4 reference signal resources is #1, #3, #2, and #4.

Optionally, only when the fourth MAC CE meets a third condition, the bit part indicating the second information is present. The third condition includes one or a combination of the following:
one field in the fourth MAC CE indicates that the MAC CE includes a bit part indicating the second information;
one TRP is a TRP having only an uplink function, or an RRC configuration specifies that downlink transmission is based on a single TRP and uplink transmission is based on two TRPs; and
path loss reference signal resources in all second uplink TCI-states activated by the fourth MAC CE are SRS resources.

In this implementation, the MAC CE used to activate separate uplink/downlink TCI-states may be enhanced, and an additional field is introduced to indicate one or more pieces of second information. The one or more pieces of second information correspond to one or more TCI-states activated by the MAC CE, or reference signal resources in one or more activated second uplink TCI-states.

804: The terminal device determines a path loss of the second uplink signal based on the second information corresponding to the second uplink signal.

The terminal device may determine the path loss of the second uplink signal with reference to the manner described in step 604 in FIG. 6, and same or similar beneficial effect can be achieved.

805: The terminal device determines a transmit power of a third uplink signal.

Specifically, the terminal device first determines a TCI-state used by the third uplink signal, determines which one of the second uplink signals is a reference signal resource in the TCI-state, and then calculates, based on the path loss corresponding to the second uplink signal, the transmit power corresponding to the third uplink signal.

806: The terminal device sends the third uplink signal to the second network device at the transmit power of the third uplink signal.

In this embodiment of this application, the terminal device may calculate the transmit power based on the path loss of the second uplink signal, and transmit the third uplink signal to the second network device at the transmit power. The third uplink signal may be any uplink signal other than the second uplink signal, or may be an uplink signal (for example, an SRS) same as the second uplink signal.

In this implementation, the terminal device may determine the transmit power of the third uplink signal based on the path loss value corresponding to the TCI-state used by the third uplink signal or based on a path loss value of the reference signal in the TCI-state used by the third uplink signal, to send the third uplink signal at the transmit power.

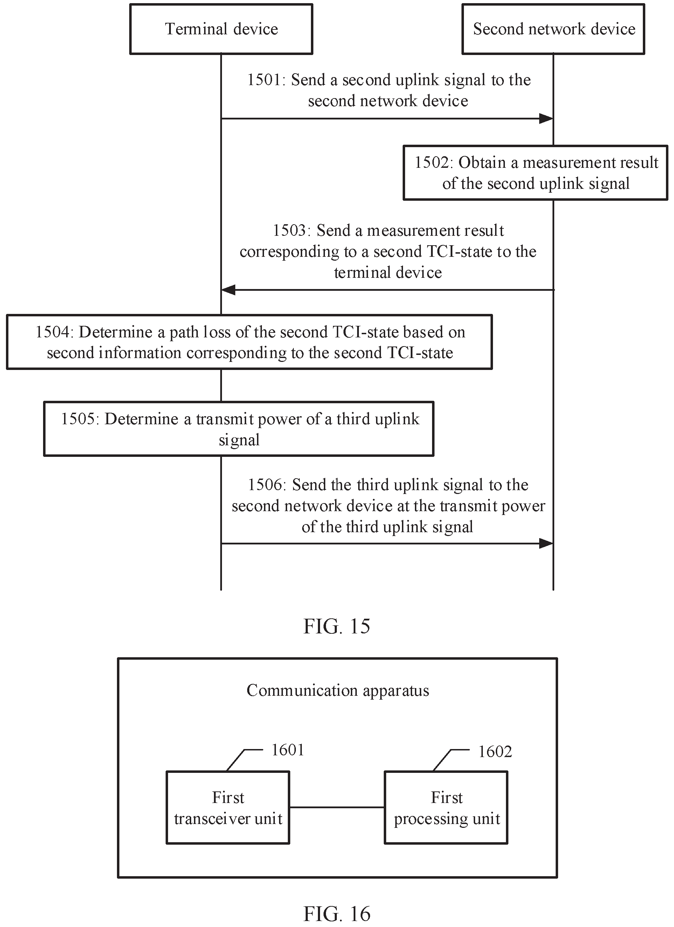

FIG. 15 is a schematic flowchart of another communication method according to an embodiment of this application. As shown in FIG. 15, the method includes steps 1501 to 1506.

1501: A terminal device sends a second uplink signal to a second network device.

1502: The second network device obtains a measurement result of the second uplink signal.

For specific implementations of steps 1501 and 1502, refer to corresponding descriptions of steps 601 and 602 in FIG. 6, and same or similar beneficial effect can be achieved.

1503: The second network device sends, to the terminal device, a measurement result corresponding to a second TCI-state.

That is, the second network device sends, to the terminal device, second information corresponding to the second TCI-state. The second network device may send the second information via a first network device.

Optionally, the second information corresponding to the second TCI-state may be indicated through RRC signaling. For example, the second information corresponding to the second TCI-state is configured based on the RRC signaling. Specifically, one configuration parameter in the TCI-state may indicate the second information corresponding to the TCI-state. In other words, second information corresponding to one TCI-state may be configured in a configuration parameter of the TCI-state. In addition to the second information, a path loss reference resource may be further configured in the TCI-state, to determine a path loss corresponding to the TCI-state. It may be specified that when the path loss reference resource in the TCI-state is a downlink reference signal resource, the second information cannot be configured in the TCI-state. If the TCI-state has a corresponding downlink reference signal resource as the path loss resource, the terminal device may directly obtain, through measurement based on the path loss resource, the path loss corresponding to the TCI-state, and does not need to perform calculation based on the second information. Alternatively, on the contrary, when the path loss resource in the TCI-state is an uplink reference signal resource, the second information needs to be configured in the TCI-state. Otherwise, the terminal device cannot calculate, by using the foregoing method, the path loss value corresponding to the TCI-state. Alternatively, when no path loss resource is configured in the TCI-state, the second information needs to be configured in the TCI-state.

Optionally, the second information corresponding to the second TCI-state may be indicated through MAC CE signaling. For example, the second MAC CE, the third MAC CE, and/or the fourth MAC CE in step 603 or 803 indicate the second information corresponding to the second TCI-state.

Optionally, the second information corresponding to the second TCI-state may be jointly indicated through RRC signaling and MAC CE signaling. For example, the second information corresponding to the second TCI-state is configured based on the RRC signaling. Specifically, one configuration parameter in the TCI-state may indicate the second information corresponding to the TCI-state. Then, a variation of the second information corresponding to the second TCI-state is indicated through the MAC CE. The reason why the variation of the second information needs to be indicated is that the second information corresponding to the second TCI-state changes with movement of the terminal device.

For example, the second information corresponding to the second TCI-state is an RSRP difference or a path loss difference corresponding to the second TCI-state. The RSRP difference/path loss difference is an RSRP difference/path loss difference between an uplink signal (the uplink signal is a second uplink signal) corresponding to a reference signal resource in the second TCI-state and a first uplink signal, and may be obtained through calculation in the foregoing steps. When the RSRP difference/path loss difference corresponding to the second TCI-state changes, the network device indicates, through several MAC CEs in step 803, a variation of an RSRP difference/path loss difference corresponding to each second TCI-state.

Steps 603 and 803 are used to determine variations of RSRP differences/path loss differences corresponding to one or more second uplink signals. A same method may be used to determine variations of RSRP differences/path loss differences corresponding to one or more second TCI-states. For example, the second uplink signal in steps 603 and 803 may be replaced with the second TCI-state, to implement an indication of variations of RSRP differences/path loss differences corresponding to one or more second TCI-states.

1504: The terminal device determines the path loss of the second TCI-state based on the second information corresponding to the second TCI-state.

The terminal device may determine the path loss of the second uplink signal with reference to the manner described in step 604 in FIG. 6, and same or similar beneficial effect can be achieved. Specifically, step 604 is used to determine path losses corresponding to one or more second uplink signals, and a same method may be used to determine path losses corresponding to one or more second TCI-states. For example, the second uplink signal in step 604 may be replaced with the second TCI-state, to obtain path losses corresponding to one or more second TCI-states.

1505: The terminal device determines a transmit power of a third uplink signal.

Specifically, the terminal device first determines a TCI-state used by the third uplink signal, determines which one of the second TCI-states is the TCI-state, and then calculates, based on a path loss corresponding to the second TCI-state, the transmit power corresponding to the third uplink signal.

1506: The terminal device sends the third uplink signal to the second network device at the transmit power of the third uplink signal.

In this embodiment of this application, the terminal device may calculate the transmit power based on the path loss of the second uplink signal, and transmit the third uplink signal to the second network device at the transmit power. The third uplink signal may be any uplink signal other than the second uplink signal, or may be an uplink signal (for example, an SRS) same as the second uplink signal.

In this implementation, the terminal device may determine the transmit power of the third uplink signal based on a path loss value corresponding to the TCI-state used by the third uplink signal, so that the third uplink signal may be sent at the transmit power.

Optionally, it may be specified that the foregoing method is applicable only to a scenario in which a single control channel group is configured. That is, when a plurality of control channel groups are configured, the foregoing method cannot be used. For example, only when a single control channel group is configured, the network device can indicate the path loss difference/RSRP difference to the terminal device, and the terminal device can calculate the path loss based on the path loss difference/RSRP difference.

Alternatively, the terminal device may report, through terminal capability information, whether the terminal device supports using the foregoing method in a scenario in which a plurality of control channel groups are configured. For example, the terminal device may report whether the path loss can be calculated based on the path loss difference/RSRP difference when two control channel groups are configured.

The terminal device may further report, through the terminal capability information, whether the terminal device supports calculating the path loss based on the foregoing path loss difference/RSRP difference.

The terminal device may further report, through the terminal capability information, a maximum quantity of path loss differences/RSRP differences that can be maintained by the terminal device.

The foregoing describes the method in embodiments of this application, and the following provides an apparatus in embodiments of this application.

FIG. 16 is a diagram of a structure of a communication apparatus according to an embodiment of this application. The communication apparatus may be configured to perform a process performed by the terminal device in any one of the implementations in embodiments shown in FIG. 6, FIG. 7B, FIG. 8, and FIG. 15. For details, refer to related descriptions in the foregoing method embodiments. As shown in FIG. 16, a first transceiver unit 1601 and a first processing unit 1602 are included. The first transceiver unit 1601 may implement a corresponding communication function, and may include a first sending unit and a first receiving unit, for example, may be configured to implement corresponding functions of the foregoing steps 601 and 606, or steps 801 and 806, or steps 1501 and 1506. The first processing unit 1602 may be configured to perform data processing, for example, may be configured to implement corresponding functions of steps 604 and 605, steps 804 and 805, or steps 1504 and 1505.

The first transceiver unit 1601 is configured to send a second uplink signal to a second network device, and receive a measurement result of the second uplink signal from the second network device.

The first processing unit 1602 is configured to determine a path loss of the second uplink signal based on the measurement result of the second uplink signal.

It can be learned that in the apparatus shown in FIG. 16, a terminal device may send an uplink signal to a network device, and the network device measures the uplink signal, and returns a measurement result to the terminal device, so that the terminal device can obtain a path loss between the terminal device and the network device based on the measurement result. In this manner, the path loss between the terminal device and the network device can be obtained regardless of whether the network device has a downlink function, thereby improving applicability of the solution.

In a possible implementation, the measurement result of the second uplink signal includes one or more of the following:
a received power of the second uplink signal;
a path loss of the second uplink signal;
a difference between the received power of the second uplink signal and a received power of the first uplink signal; and
a difference between the path loss of the second uplink signal and a path loss of the first uplink signal.

The first uplink signal is an uplink signal sent by the terminal device to a first network device.

In a possible implementation, the measurement result of the second uplink signal is carried in a media access control MAC control element CE.

In a possible implementation, the MAC CE is a first MAC CE, and the first MAC CE includes the measurement result of the second uplink signal and one or more of the following:
an index of the second uplink signal; and
an index of a resource set corresponding to the second uplink signal.

In a possible implementation, there are M second uplink signals, the first MAC CE includes K measurement results of second uplink signals, K is equal to a quantity of activated second transmission configuration indicator TCI states, or K is equal to a quantity of different reference signal resources included in activated second TCI states, and M is greater than or equal to K.

The second TCI state is an uplink TCI state or an uplink/downlink TCI state corresponding to a 2^{nd} control channel group.

In a possible implementation, an i^{th} measurement result in the K measurement results corresponds to an i^{th} TCI state in the K activated second TCI states; or an i^{th} measurement result in the K measurement results corresponds to a reference signal resource in an i^{th} TCI state in the K activated second TCI states.

In a possible implementation, the MAC CE is a second MAC CE, the second MAC CE is a MAC CE used to activate a TCI state of a control resource group, and the second MAC CE includes the measurement result of the second uplink signal.

In a possible implementation, the MAC CE is a third MAC CE, the third MAC CE is a MAC CE used to activate a joint uplink/downlink TCI state, and the third MAC CE includes the measurement result of the second uplink signal.

In a possible implementation, the MAC CE is a fourth MAC CE, the fourth MAC CE is a MAC CE used to activate separate uplink/downlink TCI states, and the fourth MAC CE includes the measurement result of the second uplink signal.

In a possible implementation, when the measurement result of the second uplink signal includes the received power of the second uplink signal, the determining the path loss of the second uplink signal based on the measurement result of the second uplink signal includes:
determining the path loss of the second uplink signal based on the received power of the second uplink signal and a transmit power of the second uplink signal.

In a possible implementation, the method further includes:
determining a transmit power of a third uplink signal based on the path loss of the second uplink signal; and
sending the third uplink signal to the second network device at the transmit power of the third uplink signal.

It should be noted that, for implementations of the units described in FIG. 16, refer to corresponding descriptions of embodiments shown in FIG. 6 to FIG. 15. In addition, for beneficial effect brought by the communication apparatus described in FIG. 16, refer to corresponding descriptions of embodiments shown in FIG. 6 to FIG. 15. Details are not described herein again.

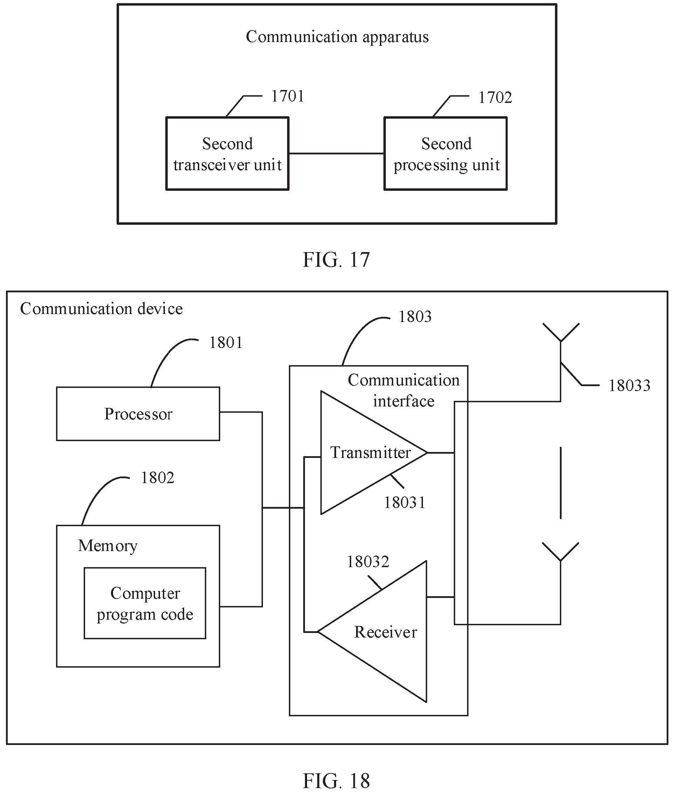

FIG. 17 is a diagram of a structure of another communication apparatus according to an embodiment of this application. The communication apparatus may be configured to perform a process performed by the second network device in any one of the implementations in embodiments shown in FIG. 6, FIG. 7B, FIG. 8, and FIG. 15. For details, refer to related descriptions in the foregoing method embodiments. As shown in FIG. 17, the apparatus includes a second transceiver unit 1701 and a second processing unit 1702. The second transceiver unit 1701 may implement a corresponding communication function, and may include a second sending unit and a second receiving unit. For example, the second transceiver unit 1701 may be configured to implement a corresponding function of step 602, step 802, or step 1502. The second processing unit 1702 may be configured to perform data processing, for example, may be configured to implement a corresponding function of step 603, step 803, or step 1503.

The second transceiver unit 1701 is configured to receive a second uplink signal sent by a terminal device.

The second processing unit 1702 is configured to obtain a measurement result of the second uplink signal.

The second transceiver unit 1701 is further configured to send the measurement result of the second uplink signal to the terminal device.

It can be learned that in the apparatus shown in FIG. 16, a network device may receive an uplink signal sent by a terminal device, measure the uplink signal, and then return a measurement result to the terminal device, so that the terminal device can obtain a path loss between the terminal device and the network device based on the measurement result. In this manner, the path loss between the terminal device and the network device can be obtained regardless of whether the network device has a downlink function, thereby improving applicability of the solution.

In a possible implementation, the measurement result of the second uplink signal includes one or more of the following:
a received power of the second uplink signal;
a path loss of the second uplink signal;
a difference between the received power of the second uplink signal and a received power of a first uplink signal; and
a difference between the path loss of the second uplink signal and a path loss of the first uplink signal.

The first uplink signal is an uplink signal sent by the terminal device to a first network device.

In a possible implementation, the measurement result of the second uplink signal is carried in a media access control MAC control element CE.

In a possible implementation, the MAC CE is a first MAC CE, and the first MAC CE includes the measurement result of the second uplink signal and one or more of the following:
an index of the second uplink signal; and
an index of a resource set corresponding to the second uplink signal.

In a possible implementation, there are M second uplink signals, the first MAC CE includes K measurement results of second uplink signals, K is equal to a quantity of activated second transmission configuration indicator TCI states, or K is equal to a quantity of different reference signal resources included in activated second TCI states, and M is greater than or equal to K.

The second TCI state is an uplink TCI state or an uplink/downlink TCI state corresponding to a 2^{nd} control channel group.

In a possible implementation, an i^{th} measurement result in the K measurement results corresponds to an i^{th} TCI state in the K activated second TCI states; or an i^{th} measurement result in the K measurement results corresponds to a reference signal resource in an i^{th} TCI state in the K activated second TCI states.

In a possible implementation, the MAC CE is a second MAC CE, the second MAC CE is a MAC CE used to activate a TCI state of a control resource group, and the second MAC CE includes the measurement result of the second uplink signal.

In a possible implementation, the MAC CE is a third MAC CE, the third MAC CE is a MAC CE used to activate a joint uplink/downlink TCI state, and the third MAC CE includes the measurement result of the second uplink signal.

In a possible implementation, the MAC CE is a fourth MAC CE, the fourth MAC CE is a MAC CE used to activate separate uplink/downlink TCI states, and the fourth MAC CE includes the measurement result of the second uplink signal.

It should be noted that, for implementations of the units described in FIG. 17, refer to corresponding descriptions of embodiments shown in FIG. 6 to FIG. 15. In addition, for beneficial effect brought by the communication apparatus described in FIG. 17, refer to corresponding descriptions of embodiments shown in FIG. 6 to FIG. 15. Details are not described herein again.

FIG. 18 is a diagram of a structure of a communication device according to an embodiment of this application. The communication device includes at least a processor 1801, a memory 1802, and a communication interface 1803. The communication interface 1803 includes a transmitter 18031, a receiver 18032, and an antenna 18033. The transmitter 18031 and the receiver 18032 may form a transceiver. The communication device may be configured to perform related steps of the communication method. The communication device may be a terminal device in a wireless communication system, or a communication module in a terminal device, or a chip responsible for a communication function in a terminal device, for example, a modem chip (also referred to as a baseband chip), or an SoC or an SIP chip including a modem module. When the communication device is a chip, the communication interface 1803 may be an input/output interface of the chip. For example, the transmitter 18031 may be an output interface, the receiver 18032 may be an input interface, and the memory 1802 may be an external memory of the chip. When the communication device is a terminal device, the communication interface 1803 may be specifically a transceiver, and may be configured to perform the steps performed by the first transceiver unit 1601, and the processor 1801 may be configured to perform the steps performed by the first processing unit 1602. The processor 1801 in the communication device is configured to read computer program code stored in the memory 1802, to perform the method according to any one of embodiments shown in FIG. 6 to FIG. 15.

The memory 1802 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1802 is configured to store a related computer program and data.

The processor 1801 may be one or more central processing units (central processing units, CPUs). When the processor 1801 is one CPU, the CPU may be a single-core CPU or a multi-core CPU.

For example, the processor 1801 in the communication device may be configured to read one or more programs stored in the memory 1802, to perform the following operations:
sending a second uplink signal to a second network device;
receiving a measurement result of the second uplink signal from the second network device; and
determining a path loss of the second uplink signal based on the measurement result of the second uplink signal.

It should be noted that, for an implementation of each operation, refer to corresponding descriptions of the method according to any one of embodiments shown in FIG. 6 to FIG. 15.

It should be noted that, although the communication device shown in FIG. 18 shows only the processor 1801, the memory 1802, the communication interface 1803, the transmitter 18031, the receiver 18032, and the antenna 18033, in a specific implementation process, persons skilled in the art should understand that the communication device further includes another component required for implementing normal running. Moreover, based on a specific requirement, persons skilled in the art should understand that the communication device may further include hardware components for implementing other additional functions. In addition, persons skilled in the art should understand that the communication device may include only components necessary for implementing embodiments of this application, but not necessarily include all the components shown in FIG. 18.

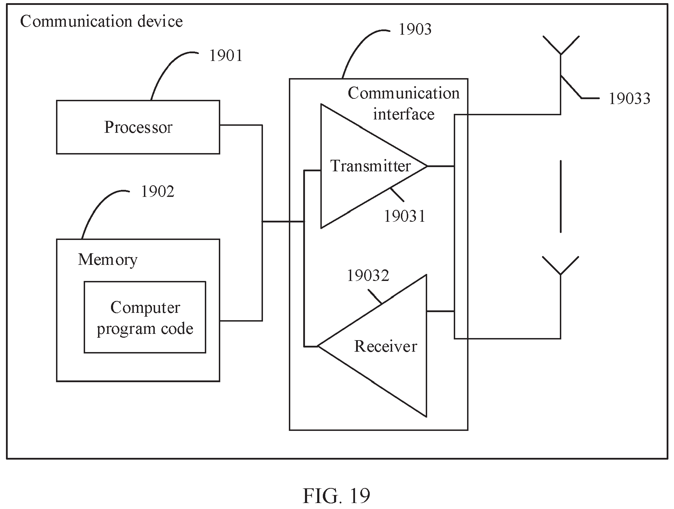

FIG. 19 is a diagram of a structure of another communication device according to an embodiment of this application. The communication device includes at least a processor 1901, a memory 1902, and a communication interface 1903. The communication interface 1903 includes a transmitter 19031, a receiver 19032, and an antenna 19033. The transmitter 18031 and the receiver 18032 may form a transceiver. The communication device may be configured to perform related steps of the communication method. The communication device may be a network device in a wireless communication system or a chip in a network device. When the communication device is a chip, the communication interface 1903 may be an input/output interface of the chip. For example, the transmitter 19031 may be an output interface, the receiver 19032 may be an input interface, and the memory 1902 may be an external memory of the chip. When the communication device is a network device, the communication interface 1903 may be specifically a transceiver, and may be configured to perform the steps performed by the second transceiver unit 1701. The processor 1901 may be configured to perform the steps performed by the second processing unit 1702. The processor 1901 in the communication device is configured to read computer program code stored in the memory 1902, to perform the method according to any one of embodiments shown in FIG. 6 to FIG. 15.

The memory 1902 includes but is not limited to a RAM, a ROM, an EPROM, and a CD-ROM. The memory 1902 is configured to store a related computer program and data.

The processor 1901 may be one or more CPUs. When the processor 1901 is one CPU, the CPU may be a single-core CPU, or a multi-core CPU.

For example, the processor 1901 in the communication device may be configured to read one or more programs stored in the memory 1902, to perform the following operations:
receiving a second uplink signal sent by a terminal device;
obtaining a measurement result of the second uplink signal; and
sending the measurement result of the second uplink signal to the terminal device.

It should be noted that, for an implementation of each operation, refer to corresponding descriptions of the method according to any one of embodiments shown in FIG. 6 to FIG. 15.

It should be noted that, although the communication device shown in FIG. 19 shows only the processor 1901, the memory 1902, the communication interface 1903, the transmitter 19031, the receiver 19032, and the antenna 19033, in a specific implementation process, persons skilled in the art should understand that the communication device further includes another component required for implementing normal running. Moreover, based on a specific requirement, persons skilled in the art should understand that the communication device may further include hardware components for implementing other additional functions. In addition, persons skilled in the art should understand that the communication device may include only components necessary for implementing embodiments of this application, but not necessarily include all the components shown in FIG. 19.

An embodiment of this application further provides a chip, including a processor, configured to invoke a computer program from a memory and run the computer program, to enable a device in which the chip is mounted to perform the method described in any one of embodiments in FIG. 6 to FIG. 15. The chip may be a chip in a communication device.

An embodiment of this application further provides a computer-readable storage medium (Memory). The computer-readable storage medium stores a computer program, and when the computer program is run, the method described in any one of embodiments in FIG. 6 to FIG. 15 is implemented. It may be understood that the computer-readable storage medium herein may include a built-in storage medium in a device, and certainly may also include an expanded storage medium supported by the device. The computer-readable storage medium provides storage space, and the storage space stores an operating system of the device. In addition, the storage space further stores one or more computer programs suitable for being loaded and executed by a processor of the device. It should be noted that the computer-readable storage medium herein may be a highspeed RAM, or may be a non-volatile memory (non-volatile memory), for example, at least one magnetic disk memory. Optionally, the computer-readable storage medium may be at least one computer-readable storage medium located far away from the processor.

An embodiment of this application further provides a computer program product. The computer program product includes computer program code. When the computer program code is run by a communication device, the method procedure described in any one of embodiments in FIG. 6 to FIG. 15 is implemented.

In the foregoing embodiments, the description of each embodiment has respective focuses. For a part that is not described in detail in an embodiment, refer to related descriptions in other embodiments.

It should be understood that the processor mentioned in embodiments of this application may be a CPU, or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory or a non-volatile memory, or may include a volatile memory and a non-volatile memory. The non-volatile memory may be a ROM, a programmable read-only memory (Programmable ROM, PROM), an EPROM, an electrically erasable programmable read-only memory (Electrically EPROM, EEPROM), or a flash memory. The volatile memory may be a RAM, and serves as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include, but is not limited to, these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate components may or may not be physically separated. The components displayed as units may or may not be physical units, and may be located in one location, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit. When the foregoing integrated unit is implemented in the form of a software functional unit and sold or used as an independent product, the integrated unit may be stored in a computer-readable storage medium.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally represents an "or" relationship between associated objects.

A sequence of the steps of the method in embodiments of this application may be adjusted, combined, or removed based on an actual requirement.

The modules in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, applied to a terminal device, wherein the method comprises:
sending a second uplink signal to a second network device;
receiving a measurement result of the second uplink signal from the second network device;
and
determining a path loss of the second uplink signal based on the measurement result of the second uplink signal.

2. A communication method, applied to a second network device, wherein the method comprises:
receiving a second uplink signal sent by a terminal device;
obtaining a measurement result of the second uplink signal; and
sending the measurement result of the second uplink signal to the terminal device.

3. The method according to claim 1 or 2, wherein the measurement result of the second uplink signal comprises one or more of the following:
a received power of the second uplink signal;
the path loss of the second uplink signal;
a difference between the received power of the second uplink signal and a received power of a first uplink signal; and
a difference between the path loss of the second uplink signal and a path loss of the first uplink signal, wherein
the first uplink signal is an uplink signal sent by the terminal device to a first network device.

4. The method according to claim 1, 2, or 3, wherein the measurement result of the second uplink signal is carried in a media access control MAC control element CE.

5. The method according to claim 4, wherein the MAC CE is a first MAC CE, and the first MAC CE comprises the measurement result of the second uplink signal and one or more of the following:
an index of the second uplink signal; and
an index of a resource set corresponding to the second uplink signal.

6. The method according to claim 5, wherein there are M second uplink signals; the first MAC CE comprises K measurement results of second uplink signals; K is equal to a quantity of activated second transmission configuration indicator TCI states, or K is equal to a quantity of different reference signal resources comprised in activated second TCI states; and M is greater than or equal to K; and
the second TCI state is an uplink TCI state or an uplink/downlink TCI state corresponding to a 2^{nd} control channel group.

7. The method according to claim 6, wherein an i^{th} measurement result in the K measurement results corresponds to an i^{th} TCI state in the K activated second TCI states; or an i^{th} measurement result in the K measurement results corresponds to a reference signal resource in an i^{th} TCI state in the K activated second TCI states.

8. The method according to claim 4, wherein the MAC CE is a second MAC CE, the second MAC CE is a MAC CE used to activate a TCI state of a control resource group, and the second MAC CE comprises the measurement result of the second uplink signal.

9. The method according to claim 4, wherein the MAC CE is a third MAC CE, the third MAC CE is a MAC CE used to activate a joint uplink/downlink TCI state, and the third MAC CE comprises the measurement result of the second uplink signal.

10. The method according to claim 4, wherein the MAC CE is a fourth MAC CE, the fourth MAC CE is a MAC CE used to activate separate uplink/downlink TCI states, and the fourth MAC CE comprises the measurement result of the second uplink signal.

11. The method according to any one of claim 1 and claims 3 to 10, wherein when the measurement result of the second uplink signal comprises the received power of the second uplink signal, the determining the path loss of the second uplink signal based on the measurement result of the second uplink signal comprises:
determining the path loss of the second uplink signal based on the received power of the second uplink signal and a transmit power of the second uplink signal.

12. The method according to any one of claim 1 and claims 3 to 10, wherein the method further comprises:
determining a transmit power of a third uplink signal based on the path loss of the second uplink signal; and
sending the third uplink signal to the second network device at the transmit power of the third uplink signal.

13. A communication apparatus, comprising a module configured to perform the method according to any one of claim 1 and claims 3 to 12, or comprising a module configured to perform the method according to any one of claims 2 to 10.

14. A communication device, comprising a processor, a memory, a communication interface, and one or more programs, wherein the one or more programs are stored in the memory, and when executed by the processor, the one or more programs cooperate with the communication interface to implement the method according to any one of claim 1 and claims 3 to 12, or any one of claims 2 to 10.

15. A computer-readable storage medium, wherein the computer-readable storage medium stores a computer program for execution by a device, and when the computer program is executed, the method according to any one of claim 1 and claims 3 to 12, or any one of claims 2 to 10 is implemented.

16. A chip, comprising a processor, wherein the processor is configured to: invoke a computer program from a memory and run the computer program, to enable a device in which the chip is mounted to perform the method according to any one of claim 1 and claims 3 to 12, or any one of claims 2 to 10.

17. A computer program product, wherein when the computer program product is executed by a communication device, the communication device is enabled to perform the method according to any one of claim 1 and claims 3 to 12, or any one of claims 2 to 10.
